# EUROPEAN PATENT APPLICATION

(11) **EP 1 083 755 A2**
(43) Date of publication of application: **14.03.2001**
(21) Application number: 00118633.7
(22) Date of filing: 28.08.2000
(51) Int. Cl.: H04N 13/02, H04N 13/04, H04N 13/00

(54) **Image input apparatus and image display apparatus**

(30) Priority: 07.09.1999 JP 25334099; 12.01.2000 JP 2000003264; 07.02.2000 JP 2000028853
(71) Applicant: Mixed Reality Systems Laboratory Inc., Yokohama-shi, Kanagawa-ken (JP)
(72) Inventor: Sudo, Toshiyuki, c/o MIXED REALITY SYSTEMS LAB.INC, Yokohama-shi, Kanagawa-ken (JP); Takagi, Akinari, c/o MIXED REALITY SYSTEMS LAB.INC, Yokohama-shi, Kanagawa-ken (JP); Osaka, Tsutomu, c/o MIXED REALITY SYSTEMS LAB.INC., Yokohama-shi, Kanagawa-ken (JP)
(74) Representative: Leson, Thomas Johannes Alois, Dipl.-Ing.

(57) **Abstract**

An image display apparatus has an image display for displaying a parallax image, and a display optical system for guiding light from the image display to the position of the exit pupil. The exit pupil is spatially and temporally divided into a plurality of areas, a passing beam to each area is controlled, and control is effected on switching between parallax images on the image display means corresponding to passing beams through the respective areas of the exit pupil, whereby a plurality of parallax images are perceived by a single eye of an observer.

## Description

### BACKGROUND OF THE INVENTION

### Field of the Invention

The present invention relates to image input apparatus and image display apparatus for recording and reproducing three-dimensional imagery (parallax images) and, more particularly, to those permitting an observer to observe an image displayed on an image display means, in a natural condition without feeling fatigued and in a good image state.

### Related Background Art

A variety of attempts have been conducted heretofore to substantiate methods of recording image information of stereoscopic objects (three-dimensional objects) in an image recording means and stereoscopically reproducing the image information recorded in the image recording means.

Commonly used among them are methods of presenting stereoscopic vision to the observer by use of binocular parallax (methods with polarizing glasses, lenticular methods, etc.).

Since these methods give rise to a contradiction between the accommodation and the vergence of the observer's eyes, the observer often feels fatigued or uncomfortable.

There thus have been some attempts made to develop methods of reproducing three-dimensional image reproducing methods that satisfied other three-dimensional recognition functions of eyes, without depending upon only the binocular parallax.

Among them, according to Chapter III, Paragraph VIII "Studies on stereoscopic vision of super-multiview regions" in "Final outcome reports of advanced stereoscopic dynamic picture communication project" issued by Tsushin-Hoso Kiko (Communication-Broadcasting Organization) in 1997, under the stereoscopic display of "super-multiview regions" in which view points are sampled at frequencies higher than the spatial frequencies of observer's pupils and in which continuous parallax stereograms are reproduced in fashion similar to actually existing objects, a plurality of parallax images are incident to a single eye of the observer and this presents the effect of guiding the focal accommodation of the observer's eyes to the converging point of observer's eyes so as to relieve the fatigue or uncomfortable feeling of the observer.

Namely, the above reports present the view that stereoscopy is implemented with less fatigue of the eyes thanks to the "monocular parallax effect" when the stereoscopic display method of presenting parallax images from two view points to the both eyes, employed heretofore, is extended to a method of presenting parallax images from n view points, to the n view points and when the distance between two adjacent points among the n view points is set smaller than the observer's pupil.

Further, Chapter III, Paragraph VI "Research and development of multiocular stereoscopic displays by focused light array (FLA)" in the above reports presents a specific example for carrying out the above theory.

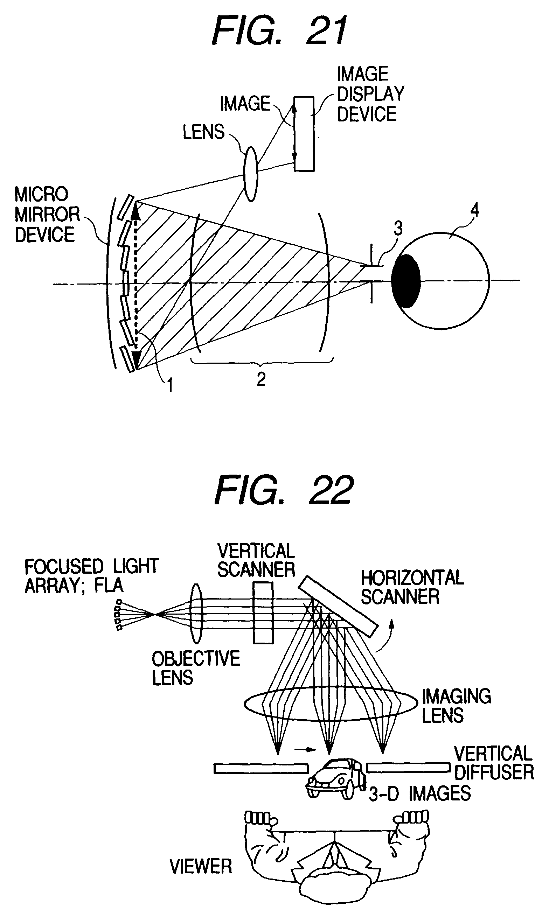

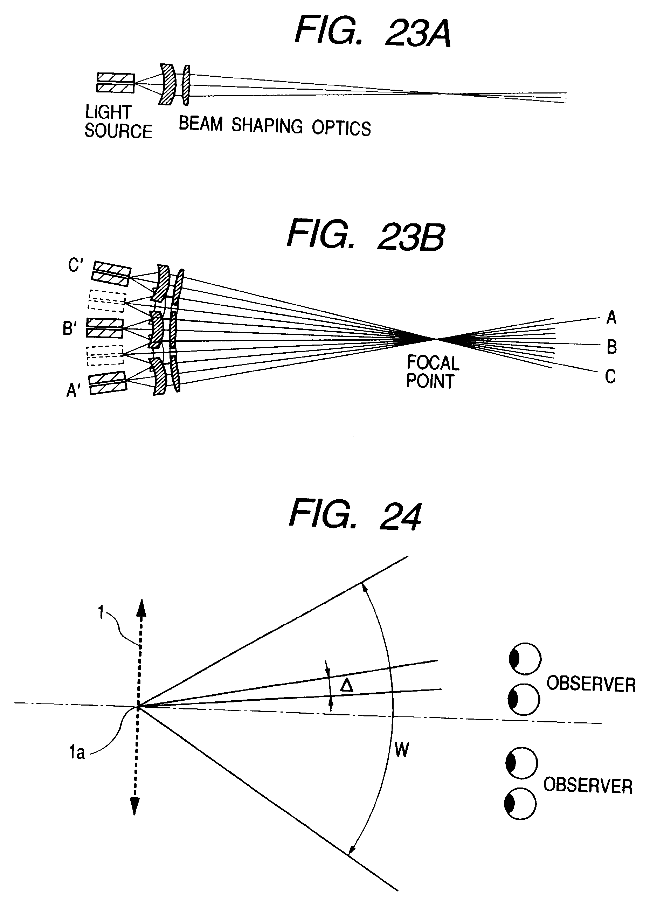

Fig. 22 is a structural diagram of this specific example. In Fig. 22 FLA is an abbreviation for the focused light array and has the structure as illustrated in Figs. 23A and 23B.

FLA is an array of beams obtained by shaping light from light sources, such as semiconductor lasers, into fine beams by optical systems (beam shaping optics) as illustrated in Fig. 23A and focusing an arcuate array of beams all into the center of a circle as illustrated in Fig. 23B.

The focal point thus formed is re-imaged on a vertical diffuser by an optical system (an objective lens and an imaging lens) and is two-dimensionally scanned at high speed by a scanning system (a vertical scanner and a horizontal scanner) to form a two-dimensional image. If cycles of the scanning are within the after image tolerance time of the observer's eyes (i.e., within about 1/50 second), the image can be observed without a flicker.

The focal point at a certain moment constitutes individual pixels of the two-dimensional image and the pixels can be considered to be bright points emitting rays in different directions in the number equal to the number of original light sources.

In what directions the rays are to be emitted can be determined by selection of light sources to be lighted. Since the emission directions of rays differ by only a very small angle, the condition is that two or more different rays are incident to the observer's pupil at the observation position.

Namely, the above structure realizes the stereoscopic display of "super-multiview regions" in which a plurality of parallax images are incident to the single eye of observer, whereby the focus accommodation of the observer's eyes is guided to near the stereoscopic image, thereby relieving the fatigue or uncomfortable feeling of the observer.

The prior art involves the following problems. Since the very fine parallax images need to be presented to the observer in the case of the stereoscopic display of "super-multiview regions," it raises the necessity of handling extremely enormous volumes of image information. In addition, since all the parallax images must be displayed within the after image tolerance time of the observer's eyes, a very fast information display means is essential.

According to the above-stated document, the intervals of the parallax images are 0.5° and thus forty five parallax images are reproduced for the observation area of 22.5° in the horizontal direction.

For this reason, the image information processing and quick image display must be forty five times those of the ordinary two-dimensional image display apparatus.

The prior art example employs the combination of the scanning system with the semiconductor lasers in order to satisfy such quick drawing performance, but they are not ordinary means for the image information display means and are practically unpreferred because of increase in the scale of apparatus and in production cost and speciality of image processing.

### SUMMARY OF THE INVENTION

An object of the present invention is to provide image input apparatus and image display apparatus that facilitate recording and display of a stereoscopic image and that permits the observer to observe the stereoscopic image in a good state without feeling fatigued.

An image display apparatus according to one aspect of the present invention is an image display apparatus comprising image display means for displaying a parallax image, a display optical system for guiding light from the image display means to a position of an exit pupil, exit pupil control means for spatially and temporally dividing the exit pupil into a plurality of areas and controlling a passing beam to each area, and image switching control means for controlling switching between parallax images of the image display means in correspondence to passing beams through the respective areas of the exit pupil, wherein a plurality of parallax images are perceived by a single eye of an observer.

An image display apparatus according to another aspect of the present invention is an image display apparatus comprising image display means for displaying a parallax image, a display optical system for guiding light from the image display means to a position of an exit pupil, and exit pupil control means for controlling a position or a size of the exit pupil in a direction perpendicular to the optical axis, dividing the exit pupil into a plurality of areas, and successively generating the plurality of divided areas of the exit pupil without duplication, wherein the image display means successively displays corresponding parallax images according to beams passing the respective areas thus generated.

An image display apparatus according to another aspect of the present invention is an image display apparatus comprising image display means for displaying a parallax image, a display optical system for guiding light from the image display means to a dividing aperture, the dividing aperture having a plurality of apertures, wherein an arbitrary aperture out of the plurality of apertures is selected as a passing area of light, and control means for controlling a position of the light-passing aperture in the dividing aperture and the parallax image displayed on the image display means.

In a further aspect of the present invention, the exit pupil or dividing aperture has a diameter two to five times larger than a diameter of the pupil of the observer using the image display apparatus.

In a further aspect of the present invention, any one of the plurality of areas in the exit pupil or dividing aperture has a size not more than half a size of the pupil of the observer using the image display apparatus.

In a further aspect of the present invention, the image display apparatus is mounted on the head of the observer, and the exit pupil is fixed at the position of the pupil of the observer.

In a further aspect of the present invention, the exit pupil or dividing aperture is divided into a plurality of areas only in the horizontal direction.

In a further aspect of the present invention, the image display means comprises a transmissive spatial light modulator and the exit pupil control means or dividing aperture comprises a self-emissive spatial light modulator.

In a further aspect of the present invention, the image display means comprises a self-emissive spatial light modulator and the exit pupil control means or dividing aperture comprises a transmissive spatial light modulator.

In a further aspect of the present invention, each of the image display means and either the exit pupil control means or dividing aperture comprises a transmissive spatial light modulator.

In a further aspect of the present invention, the exit pupil control means comprises a micro-mirror device.

An image input apparatus according to one aspect of the present invention is an image input apparatus comprising imaging means for imaging an object, an imaging optical system for guiding light from the object to the imaging means, aperture generating means for spatially and temporally dividing a pupil of the imaging optical system into a plurality of areas and controlling a passing beam to each area, and control means for controlling switching between parallax images taken by the imaging means in correspondence to the respective areas of the pupil so as to effect input of the parallax images.

An image input apparatus according to another aspect of the present invention is an image input apparatus comprising imaging means for imaging object information, an imaging optical system for guiding light from an object to the imaging means, aperture generating means for controlling a position or a size of a pupil of the imaging optical system, dividing the pupil into a plurality of areas, and limiting a beam-passing area, and control means for making the imaging means successively take corresponding parallax images according to positions of the aperture of the pupil.

In a further aspect of the present invention, the pupil is divided into a plurality of areas only in the horizontal direction.

In a further aspect of the present invention, the aperture generating means comprises a transmissive spatial light modulator.

A stereoscopic display apparatus according to one aspect of the present invention comprises the above-stated image display apparatus and the above-stated image input apparatus.

A stereoscopic display system according to another aspect of the present invention is a stereoscopic display system comprising imaging means for imaging an object, an imaging optical system for guiding light from the object to the imaging means, aperture generating means for spatially and temporally dividing a pupil of the imaging optical system into a plurality of areas and controlling a passing beam to each area, control means for controlling switching between parallax images taken by the imaging means in correspondence to the respective areas of the pupil so as to effect input of the parallax images, image display means for displaying a parallax image, a display optical system for guiding light from the image display means to a position of an exit pupil, exit pupil control means for spatially and temporally dividing the exit pupil into a plurality of areas and controlling a passing beam to each area, and image switching control means for controlling switching of the parallax images taken by the imaging means, to the parallax images on the image display means in correspondence to passing beams through the respective areas, wherein a plurality of parallax images are perceived by a single eye of an observer.

In a further aspect of the present invention, a position and a size of the pupil of the imaging optical system are approximately equal to those of the exit pupil.

An image display apparatus according to another aspect of the present invention is an image display apparatus wherein an optical system comprising image information generating means for displaying a parallax image and a display optical system for guiding light from the image information generating means to a pupil of an observer is moved to scan in front of the pupil of the observer by scanning means whereby a plurality of parallax images are perceived by a single eye of the observer.

In a further aspect of the present invention, the display optical system sets a diameter of an exit pupil thereof smaller than a diameter of the pupil of the observer.

In a further aspect of the present invention, the scanning means moves the optical system to scan across the pupil in front of the pupil of the observer.

In a further aspect of the present invention, the optical system is moved to scan only in the horizontal direction.

In a further aspect of the present invention, the optical system is moved to scan in the horizontal direction and in the vertical direction.

In a further aspect of the present invention, one cycle of scanning effected by the scanning means is within a time of persistence of vision for the observer.

In a further aspect of the present invention, the image information generating means displays different parallax images corresponding to the scan.

In a further aspect of the present invention, the image display apparatus is mounted on the head of the observer, and the exit pupil is fixed so as to be matched with the position of the pupil of the observer.

An image display apparatus according to another aspect of the present invention is an image display apparatus comprising image display means capable of displaying image information with parallax, illumination means having an illumination light source for illuminating the image display means, and a display optical system for guiding light from the image display means to an observing eye, in which the illumination light source is located at or near a position optically equivalent to an entrance pupil of the display optical system and in which the image information is observed while a position of an exit pupil of the display optical system is approximately matched with a position of an entrance pupil of the observing eye, wherein the illumination light source comprises a plurality of unit light sources, wherein images of the unit light sources spatially divide the exit pupil of the display optical system into a plurality of illumination areas, and wherein a plurality of parallax images are made incident in time series into a single eye of an observer by making use of control means for time-divisionally controlling radiation of light from the plurality of unit light sources so as to control time division of the exit pupil of the display optical system into the plurality of illumination areas and for controlling switching between image information displayed on the image display means in correspondence to circumstances of incidence of light to the respective illumination areas.

An image display apparatus according to another aspect of the present invention is an image display apparatus comprising a plurality of image display means capable of displaying image information with parallax, at least one illumination means having an illumination light source for illuminating the plurality of image display means, and a display optical system for guiding light from the plurality of image display means to an observing eye, in which the illumination light source is located at or near a position optically equivalent to an entrance pupil of the display optical system and in which a position of an exit pupil of the display optical system is approximately matched with a position of an entrance pupil of the observing eye so as to permit observation of the image information, wherein the illumination light source comprises a plurality of unit light sources, wherein images of the unit light sources spatially divide the exit pupil of the display optical system into a plurality of illumination areas, and wherein a plurality of parallax images are made incident simultaneously or time-serially into a single eye of an observer by making use of control means for controlling parallax images displayed on the plurality of image display means in correspondence to radiation of light from the plurality of unit light sources.

In a further aspect of the present invention, the image display apparatus comprises a plurality of the illumination means, the control means time-divisionally controls radiation of light from the plurality of unit light sources in the illumination light source of each illumination means, thereby time-divisionally controlling incidence of light to the plurality of illumination areas in the exit pupil of the display optical system, and the control means controls switching between parallax images displayed on the plurality of image display means in correspondence to incidence of light to the plurality of illumination areas.

In a further aspect of the present invention, a horizontal size of the exit pupil of the display optical system is not more than 30 mm.

In a further aspect of the present invention, the plurality of unit light sources of the illumination light source are comprised of a light emitter array.

In a further aspect of the present invention, the plurality of unit light sources of the illumination light source are comprised of a surface illuminant and a transmissive spatial light modulator.

In a further aspect of the present invention, the plurality of unit light sources of the illumination light source are comprised of a surface illuminant and a reflective spatial light modulator.

In a further aspect of the present invention, the image display means comprises a transmissive spatial light modulator.

In a further aspect of the present invention, the image display means comprises a reflective spatial light modulator.

In a further aspect of the present invention, the display optical system has a prism body comprising a decentered, rotationally asymmetric, reflecting surface with optical powers differing depending upon azimuthal angles.

An image observation system according to another aspect of the present invention is a system wherein a pair of above-stated image observation apparatus are provided for the left and right eyes of the observer.

### BRIEF DESCRIPTION OF THE DRAWINGS

Fig. 1 is an explanatory diagram to illustrate the basic concept of the image display apparatus of the present invention;
Fig. 2 is a perspective view to illustrate the basic concept of the image display apparatus of the present invention;
Fig. 3 is a schematic diagram of an application where the image display apparatus of the present invention is applied to an HMD;
Fig. 4 is an explanatory diagram to illustrate a display method of the image display apparatus of the present invention;
Fig. 5 is an explanatory diagram to illustrate the display method of the image display apparatus of the present invention;
Fig. 6 is an explanatory diagram to illustrate the display method of the image display apparatus of the present invention;
Fig. 7 is an explanatory diagram to illustrate the display method of the image display apparatus of the present invention;
Fig. 8 is an explanatory diagram to illustrate the display timing of the image display apparatus of the present invention;
Fig. 9 is an explanatory diagram to illustrate the stereoscopic vision by the image display apparatus of the present invention;
Fig. 10 is an explanatory diagram to illustrate a way of dividing the pupil in the image display apparatus of the present invention;
Fig. 11 is an explanatory diagram to illustrate another way of dividing the pupil in the image display apparatus of the present invention;
Fig. 12 is a schematic diagram to show the main part of Embodiment 1 of the image display apparatus of the present invention;
Fig. 13 is a schematic diagram to show the main part of Embodiment 1 of the image display apparatus of the present invention;
Fig. 14 is a schematic diagram to show the main part of Embodiment 1 of the image input apparatus of the present invention;
Fig. 15 is a schematic diagram to show the main part of Embodiment 1 of the image input apparatus of the present invention;
Fig. 16 is a schematic diagram to show the main part of Embodiment 2 of the image display apparatus of the present invention;
Fig. 17 is a schematic diagram to show the main part of Embodiment 2 of the image display apparatus of the present invention;
Fig. 18 is a schematic diagram to show the main part of Embodiment 3 of the image display apparatus of the present invention;
Fig. 19 is a schematic diagram to show the main part of Embodiment 4 of the image display apparatus of the present invention;
Fig. 20 is an explanatory diagram to illustrate a device to which the image display apparatus of the present invention can be applied;
Fig. 21 is an explanatory diagram to illustrate a device to which the image display apparatus of the present invention can be applied;
Fig. 22 is a schematic diagram to show the main part of the conventional image display apparatus;
Fig. 23A and Fig. 23B are schematic diagrams to show the main part of the conventional image display apparatus;
Fig. 24 is an explanatory diagram to illustrate the stereoscopic display by the super-multiview regions;
Fig. 25 is a schematic diagram to show the main part of Embodiment 5 of the present invention;
Fig. 26 is a perspective view of Fig. 25;
Fig. 27 is an explanatory diagram to illustrate the display method of the image display apparatus of the present invention;
Fig. 28 is an explanatory diagram to illustrate the display method of the image display apparatus of the present invention;
Fig. 29 is an explanatory diagram to illustrate the display method of the image display apparatus of the present invention;
Fig. 30 is an explanatory diagram to illustrate the display timing of the image display apparatus of the present invention;
Fig. 31 is an explanatory diagram to illustrate the stereoscopic vision by the image display apparatus of the present invention;
Fig. 32 is an appearance view of the image display apparatus of Embodiment 5 of the present invention;
Fig. 33 is a block diagram to explain the operation in Embodiment 5 of the present invention;
Fig. 34 is an explanatory diagram to illustrate a way of dividing the pupil in Embodiment 6 of the present invention;
Fig. 35 is an explanatory diagram to illustrate another way of dividing the pupil in Embodiment 6 of the present invention;
Fig. 36 is an appearance view of the image display apparatus of Embodiment 6 of the present invention;
Fig. 37 is a block diagram to explain the operation in Embodiment 6 of the present invention;
Fig. 38 is an explanatory diagram to illustrate the basic concept of the optical system in the image observation apparatus of the present invention;
Fig. 39 is an explanatory diagram to illustrate the basic concept of the optical system in the image observation apparatus of the present invention;
Fig. 40 is an explanatory diagram to illustrate the basic concept of the optical system in the image observation apparatus of the present invention;
Fig. 41 is an explanatory diagram to illustrate the basic concept of the optical system in the image observation apparatus of the present invention;
Fig. 42 is a schematic diagram to show the main part of Embodiment 7 of the present invention;
Fig. 43 is a schematic diagram to show the main part of a modification obtained by modifying part of Embodiment 7 of the present invention;
Fig. 44 is a schematic diagram to show the main part of Embodiment 8 of the present invention;
Fig. 45 is a schematic diagram to show the main part of a modification obtained by modifying part of Embodiment 8 of the present invention;
Fig. 46 is a schematic diagram to show the main part of the illumination means according to the present invention;
Figs. 47A, 47B, 47C and 47D are schematic diagrams to show the main part of the illumination means according to the present invention;
Fig. 48 is a schematic diagram to show the main part of Embodiment 9 of the present invention;
Fig. 49 is a schematic diagram to show the main part of a modification obtained by modifying part of Embodiment 9 of the present invention;
Fig. 50 is a schematic diagram to show the main part of Embodiment 10 of the present invention;
Fig. 51 is a schematic diagram to show the main part of Embodiment 10 of the present invention; and
Fig. 52 is a schematic diagram to show the main part of Embodiment 10 of the present invention.

### DETAILED DESCRIPTION OF THE PREFERRED EMBODIMENTS

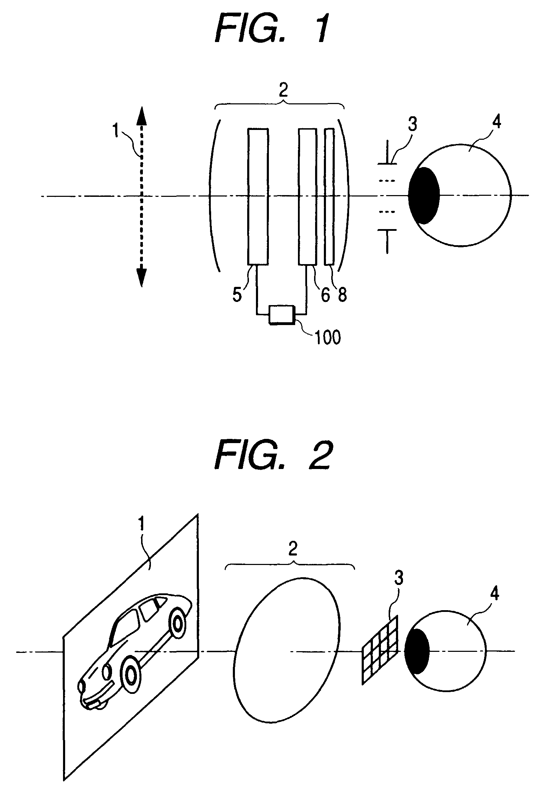

Fig. 1 is an explanatory diagram (plan view) to illustrate the basic concept of the image display apparatus according to the present invention. In Fig. 1 numeral 2 designates an optical system, which has a display optical system 8, an image information generating means (image display means) 5, and an exit pupil control means 6.

Numeral 1 denotes a virtual image of image information (parallax images) generated by the image information generating means 5.

Numeral 3 represents the exit pupil formed by the optical system 2 and the optical system 2 is designed to match this exit pupil 3 with the pupil position of the observer's eye 4. The observer's eye 4 observes the whole of the image information 1 through this exit pupil 3.

Fig. 2 is a perspective view to show an obliquely observed state of the structure of Fig. 1. Fig. 2 shows the exit pupil 3 divided in the matrix of four horizontal × three vertical areas.

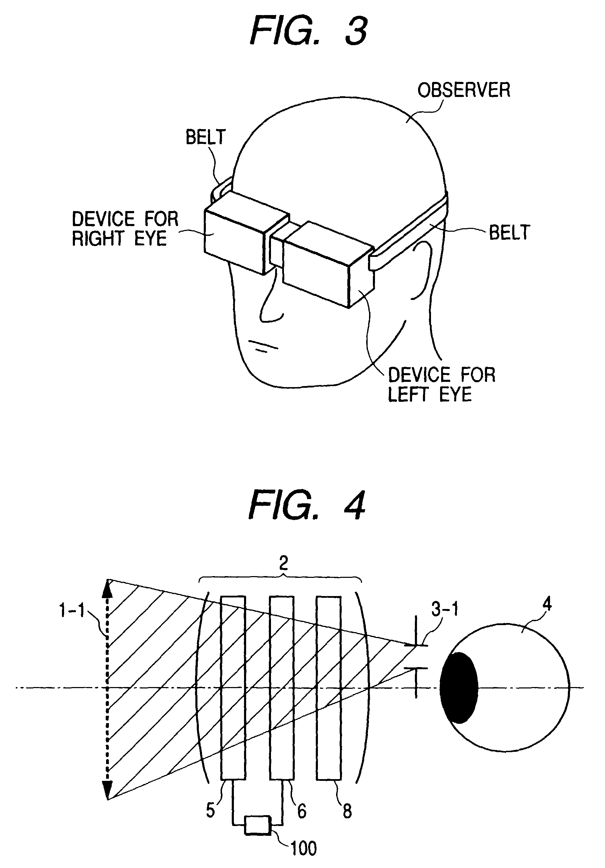

In the present embodiment the image display device of the structure described above is placed for each of the observer's left and right eyes and the devices themselves are mounted on the observer's head through a belt so as to fix the relation between the devices and the observer's pupils as illustrated in Fig. 3.

The image information generating means 5 of the left and right image display devices generate the image information in synchronism with each other. The binocular parallax images may be displayed independently of each other as the left and right image information, whereby the observer can observe a stereoscopic image.

In the present embodiment the exit pupil 3 is divided into a plurality of areas and the exit pupil control means 6 works to quickly switch the areas to control through which area in the exit pupil 3 the image information 1 displayed on the image display means 5 is presented to the observer's eye 4.

At this time, a control means 100 controls the image information displayed on the image display means 5 in correspondence to the above switching the areas of the exit pupil 3.

Fig. 4 to Fig. 7 are explanatory diagrams to illustrate this operation in the present embodiment. In Fig. 4 the exit pupil control means 6 forms the exit pupil 3-1. At this time the image information generating means 5 selects and displays the image information (parallax image) 1-1 as a corresponding image.

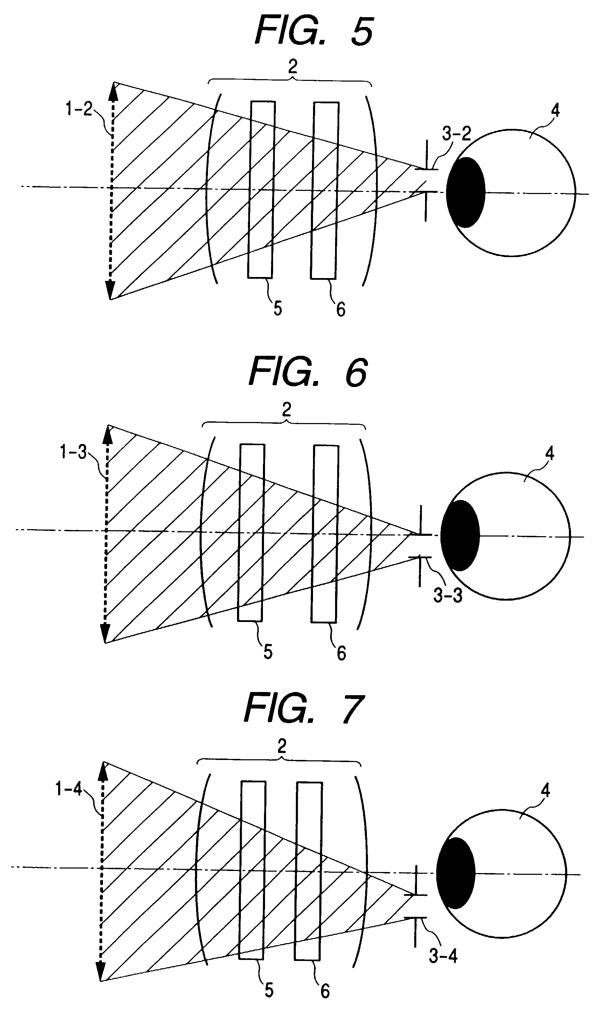

After a lapse of an infinitesimal time, the exit pupil control means 6 forms the exit pupil 3-2 as illustrated in Fig. 5. At this time the image information generating means 5 switches to display the image information 1-2 as a corresponding image.

Similarly, the image information generating means 5 switches to display the image information 1-3 correspond to formation of the exit pupil 3-3 (Fig. 6) and the image information 1-4 correspond to formation of the exit pupil 3-4 (Fig. 7).

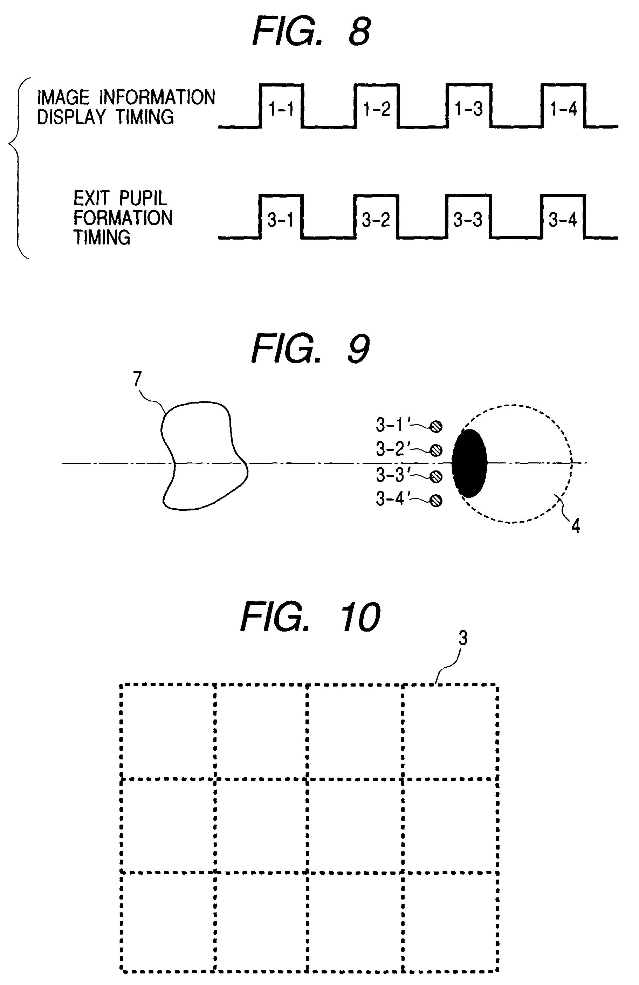

Fig. 8 is a timing chart to show the timing of displaying image information and the timing of generating one aperture area out of the plural areas of the exit pupil.

In this way, the positions of the aperture areas of the exit pupil 3 are in one-to-one correspondence to kinds of the image information displayed on the image display means 5. Since this switching operation is repeated in cycles shorter than the after image tolerance time of persistence of vision of the observer's eye, it can never be perceived by the observer.

In the present embodiment the size of each area of the divided exit pupil is set to be not more than half of the observer's pupil.

The device of the present embodiment permits the stereoscopic display of "super-multiview regions" by which the single eye of the observer can recognize a plurality of parallax images. For implementing such stereoscopic display, the parallax images according to the positions of the respective areas of the exit pupil are displayed while the formation of the areas of the exit pupil is synchronized with the display of image information.

In this case, the parallax images to be displayed are obtained as a series of parallax images obtained when the object 7 is observed from view points at center positions 3-1' to 3-4' of the respective areas 3-1 to 3-4 of the above exit pupil, as illustrated in Fig. 9.

These parallax images may be pictures actually taken by an image input apparatus using an image pickup system as described hereinafter, or may be generated on a virtual basis by computation with a computer.

The dividing number of the areas of the exit pupil 3 can be determined as occasion may demand. In cases wherein the display of image information and the formation of the exit pupil can be performed at extremely high speed, it is preferable to employ the greater dividing number of the areas of the exit pupil and thus increase the number of parallax images recognized in the single eye in the stereoscopic display of "super-multiview regions", so as to make the reproduced stereoscopic image look more natural.

For example, in the case of the dividing method into three vertical and four horizontal areas as illustrated in Fig. 10, twelve parallax images can be presented into the single eye, so as to implement reproduction of a natural stereoscopic image.

However, since the display time of each parallax image information becomes shorter with increase in the dividing number, greater numbers tend to pose the problem of insufficiency of drawing performance and image information processing performance of the image information generating means 5 and control performance of the exit pupil control means 6.

The above example requires the image drawing performance and image information processing performance at least twelve times higher than those of the ordinary two-dimensional image display means.

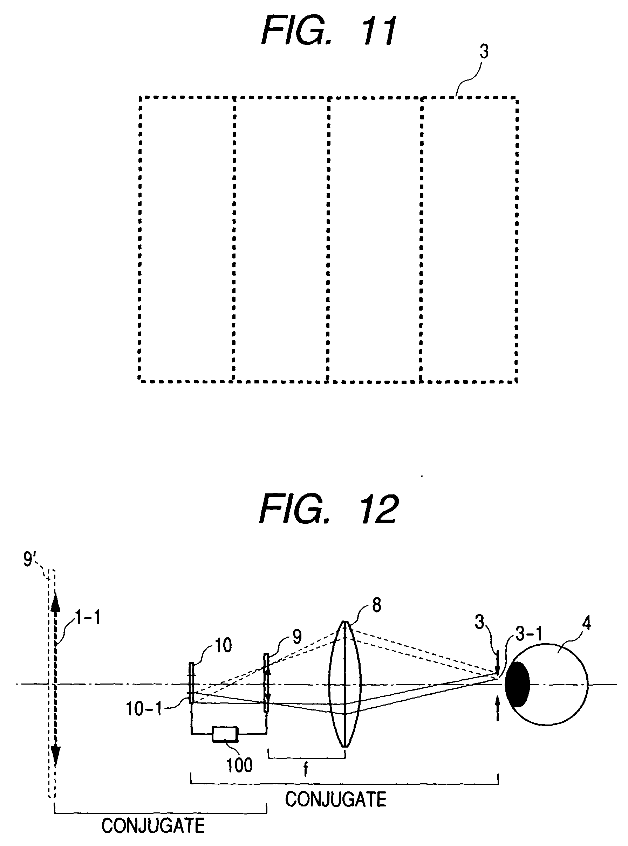

In the present embodiment, therefore, the dividing number of the exit pupil is set as small as possible. Since in the stereoscopic vision the effect of horizontal parallax is greater than that of vertical parallax, the exit pupil 3 is divided into a plurality of areas in the horizontal direction as illustrated in Fig. 11.

This reduces the number of parallax images to be displayed, to four, whereby the volume of image information can be reduced considerably as compared with the cases including the vertical parallax. Therefore, the image drawing performance and the image information processing performance required for the image information generating means 5 can be approximately four times those for the ordinary two-dimensional image display.

The exit pupil 3 and each area of the divided exit pupil do not always have to be so rectangular as illustrated, but may be circular, elliptic, or polygonal.

In the case of the image display apparatus of the head-mounted type, it is common practice to set the exit pupil a little larger than the pupil diameter in order to be ready for deviation of mount position and for ocular movement.

In the present embodiment the exit pupil is set slightly larger than the pupil diameter, whereby the observer can observe the whole of the image information 1 even with fine deviation of the observer's pupil position.

As described above, the present embodiment realizes the stereoscopic display of "super-multiview regions" by the smaller number of parallax images than before.

For example, in the case wherein the image-observable range of image information 1 is W(°) about the screen center 1a and the display intervals of the parallax images are Δ (°) as illustrated in Fig. 24, the number of parallax images is W/Δ. Since a plurality of parallax images have to be presented into the single eye for implementing the stereoscopic display of "super-multiview regions," Δ has to be set to a considerably small value.

For example, let us suppose that the observation distance from the image information 1 to the observer is 500 mm, the pupil diameter of the observer is 4 mm, and the observation area W = 30°. Then the angular intervals Δ need to be not more than 0.23° and the number of parallax images not less than 130. Since these parallax images all have to be displayed within the tolerance time of persistence of vision of the observer's eye, it is essential to use an extremely fast information display means.

Therefore, the special image information display means has to be used as in the prior art example, which raises the practically unpreferred characteristics of increase in the scale of apparatus and in the production cost and the speciality of image processing.

In contrast with it, according to the present embodiment, the exit pupil is fixed at the position of the observer's pupil, so that the number of parallax images to be presented is decreased drastically.

This increases the possibility of constructing the stereoscopic display apparatus of "super-multiview regions" by use of the ordinary image display apparatus, thereby decreasing the scale of apparatus and the production cost.

In the present embodiment the pupil diameter is set in the size slightly greater than the observer's pupil in order to be ready for the mount deviation and for the ocular movement as described above, and the size of the exit pupil is set to be two to five times greater than the size of the observer's pupil in order to maintain the effects of the invention as described above.

### (Embodiment 1)

A specific embodiment of the present invention will be presented next. Fig. 12 is a plan view of Embodiment 1 of the present invention. Although the devices are mounted for the both eyes, the figure shows only the device for one eye. In Fig. 12, numeral 8 designates a convex lens (display optical system), 9 a transmissive image display means, and 10 a divided illumination means (exit pupil control means). It is noted that the convex lens 8 does not always have to be a single lens but can be composed of a plurality of lenses.

The image display means 9 is, for example, a liquid crystal display or the like. The divided illumination means 10 is comprised of a surface illuminant divided into four areas, areas 10-1 to 10-4, which is, for example, an EL element or an LED light source provided with a diffuser.

The image information (parallax images) is expressed as a spatial light transmittance distribution on the image display means 9 and the divided illumination means 10 illuminates it from the back to visualize the image.

Since the image display means 9 and the convex lens 8 are separated by the focal length f of the convex lens 8, the image displayed on the image display means 9 is enlarged to form a virtual image 9' at infinity.

The image position of the virtual image 9' does not have to be limited to the infinity, but may be determined at any position by adjusting the distance between the image display means 9 and the convex lens 8.

On the other hand, the divided illumination means 10 is imaged at the position (pupil position) 3 in the figure by the convex lens 8. Since the divided illumination means 10 is a light source for the image display means 9, the position 3 is the substantial exit pupil of this optical system.

This exit pupil 3 is designed to match approximately with the pupil position of the observer's eye 4. Therefore, the observer observes the whole of the virtual image 9' through the exit pupil 3. The divided illumination means 10 is constructed of the surface illuminant divided into four areas in the horizontal direction as the one illustrated in Fig. 11, and the control means 100 controls which area is to be lighted at what timing.

As described previously, since the divided illumination means 10 and the exit pupil 3 are in the conjugate relation, selection of area on the divided illumination means 10 is reflected to the side of the exit pupil 3.

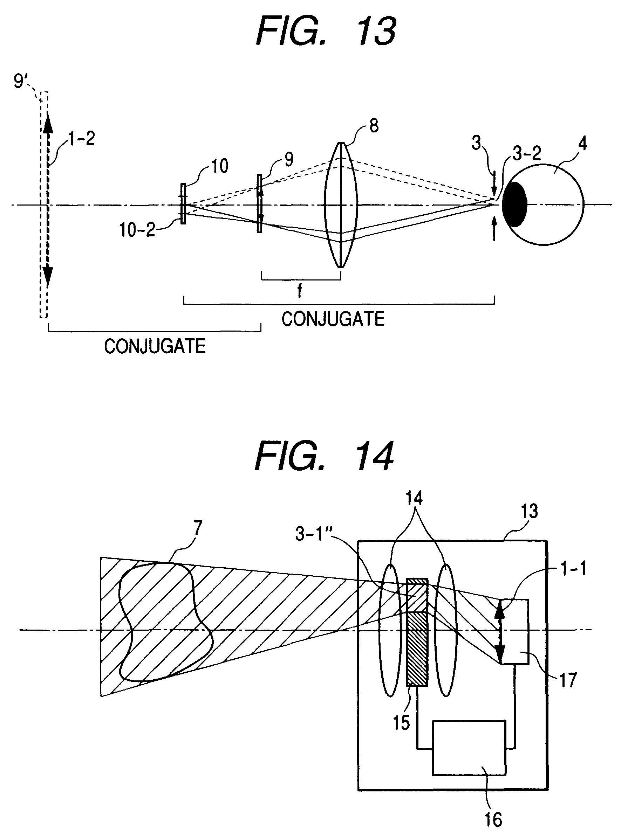

For example, when the area 10-1 is selected as a light source as illustrated in Fig. 12, the image information light emerges from only the area 3-1 out of the areas of the exit pupil 3. When the area 10-2 is selected as a light source as illustrated in Fig. 13, the image information light emerges from only the area 3-2 out of those of the exit pupil 3.

When each of the areas of the divided illumination means 10 lights up independently in this manner, the exit pupil 3 is also divided into four areas and each area exists independently.

In the present embodiment these areas of the divided surface illuminant 10 are quickly switched to light successively by the control means 100. At this time the images to be displayed on the image display means 9 are switched at high speed to be displayed in synchronism with the switching of the surface illuminant 10. The display of image and the timing of illumination are controlled by the display and illumination control means 100.

This operation creates such a situation that the four types of different parallax images displayed on the image display means 9 are observed successively through the four different areas of the exit pupil. The selection of the displayed images and the areas of the exit pupil is carried out by use of the combination as illustrated in Fig. 8 according to the concept of the present invention discussed previously.

The images 1-1 to 1-4 at this time are the parallax images corresponding to the exit pupil positions 3-1 to 3-4 as illustrated in Fig. 9.

Accordingly, the present embodiment permits four single-eye parallaxes in the horizontal direction to be presented to the observer, and this is carried out for the two eyes so as to permit the natural three-dimensional image display without causing fatigue of the eyes.

The switching frequency of display and illumination is set higher than the after image tolerance frequency of the human eyes. For that reason, the observer will never observe a flicker in the observation of image.

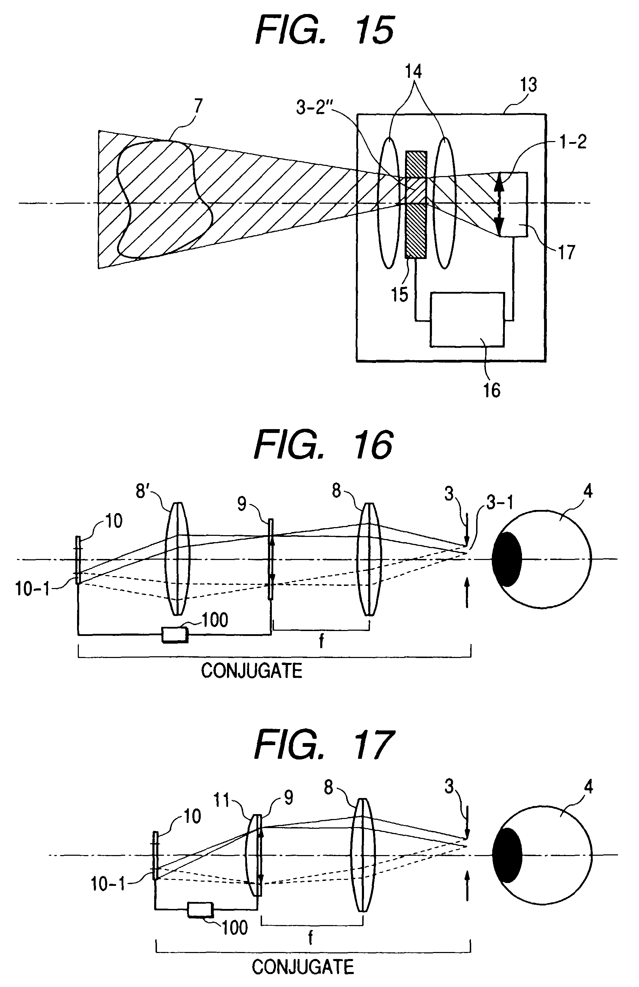

Next, an example of the image pickup apparatus (image input apparatus) for obtaining the above parallax images in the present embodiment is shown in Fig. 14 and Fig. 15.

In Fig. 14, the image pickup apparatus (image input apparatus) 13 is composed of the following members. Numeral 14 designates a taking lens (image pickup optical system) to form an image of object 7 on an image pickup device (image pickup means) 17.

An aperture generating means 15 is placed at the optical pupil position of the taking lens 14. The aperture generating means 15 is comprised of a transmissive, spatial light modulator such as a liquid crystal display or the like, which generates a light transmittance distribution to form optical aperture and shield portions. The aperture generating means 15 and image pickup device 17 both are controlled by control means 16.

The control means 16 controls the aperture position of the aperture generating means 15 so as to quickly switch the aperture position in the order of 3-1'' → 3-2'' → ..., and also controls the timing of image pickup at the image pickup device 17 in synchronism therewith.

The aperture positions 3-1'' to 3-4'' correspond to the exit pupil areas 3-1 to 3-4 (Fig. 12, Fig. 13) in the reproduction of image, and the images picked up through the respective apertures are small parallax images suitable for the stereoscopic reproduction of "super-multiview regions."

For example, the image (parallax image) picked up through the aperture 3-1'' as illustrated in Fig. 14 corresponds to the parallax image 1-1 in Fig. 4, and the image picked up through the aperture 3-2'' as illustrated in Fig. 15 to the parallax image 1-2 in Fig. 5.

The parallax images 1-3, 1-4 can also be gained by forming the apertures 3-3'', 3-4'' in similar fashion.

The small parallax images thus obtained are sent together with signals to define the correspondence to the opening positions upon the image pickup to image transmission part or recording part (not illustrated), to be transmitted or recorded for the stereoscopic display apparatus of "super-multiview regions."

The actually taken data for the stereoscopic display apparatus of "super-multiview regions" is gained by use of the image pickup apparatus as described above. This data may also be gained on a virtual basis by computation with a computer as described previously. In this case, the parallax images from the plurality of view points can be calculated by the computer according to the concept of Fig. 9.

### (Embodiment 2)

Fig. 16 is a plan view of Embodiment 2 of the image display apparatus according to the present invention. The present embodiment is different from Embodiment 1 of Fig. 12 in that a second convex lens 8' is provided in the optical system.

The convex lens 8' functions to guide the illumination light from the divided illumination means 10 approximately normally to the transmissive image display means 9.

This permits the image information to be expressed without variations in luminance throughout the entire screen even in cases wherein the transmissive image display device with field angle characteristics of the liquid crystal or the like is used as the image display means.

For the same purpose, a condenser lens 11 may be disposed near the image display means 9 as illustrated in Fig. 17.

### (Embodiment 3)

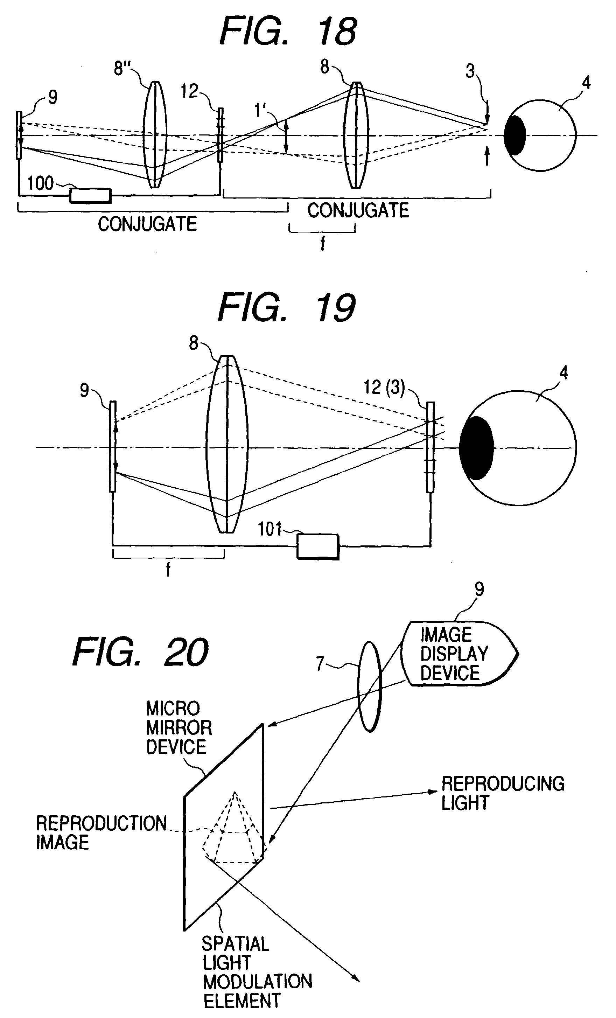

Fig. 18 is a plan view of Embodiment 3 of the present invention. In the present embodiment the image formed on the image display means 9 is imaged as an image 1' in air by a second convex lens 8''. The image position of the image 1' is coincident with the position of the image display means 9 in Embodiment 1. This causes the image 1' to be formed as an enlarged virtual image by the first convex lens 8.

A transmissive divided aperture 12 is disposed at the position of the divided illumination means 10 in Embodiment 1. Since the position of an aperture in the divided aperture 12 is controlled in a manner similar to the selection of the light source 10 in Embodiment 1, change of the aperture position in the divided aperture 12 is reflected to the divided exit pupil position in the exit pupil 3.

Therefore, the present embodiment can implement the image display entirely similar to that in Embodiment 1. In the present embodiment, the image display means 9 does not always have to be a transmissive image display means, which increases degrees of freedom for selection of the image display means.

Particularly, since the reflective, self-emissive image display devices are often normally faster as to the image drawing speed than the transmissive image display devices, the present embodiment is more advantageous in certain cases of practical use.

### (Embodiment 4)

Fig. 19 is a plan of Embodiment 4 of the present invention. Embodiment 3 described above employs the transmissive divided aperture 12 for dividing the exit pupil, whereas the present embodiment employs such a configuration that the divided aperture 12 is disposed directly near the position of the exit pupil 3.

The control means 101 controls the position of an aperture in the divided aperture, i.e., the position of the exit pupil in synchronism with control of the image displayed on the image display means 9. This realizes the effect similar to that in the other embodiments.

The present embodiment considerably simplifies the structure of the apparatus as illustrated.

There exist a lot of devices as embodiments of the present invention as described above, and the present invention can be applied to any other apparatus having the exit pupil in the size approximately equal to the observer's pupil and using the control means capable of simultaneously carrying out the exit pupil control means for dividing the exit pupil into plural areas and successively switching between the areas find the image information generating means for successively switching between presented images in synchronism therewith.

For example, Japanese Patent Application Laid-Open No. H07-239450 discloses the device illustrated in Fig. 20. In Fig. 20 the stereoscopic image display device disclosed is provided with a micro-mirror device having a plurality of microscopic mirrors placed in a matrix pattern on a substrate, a spatial light modulation element for spatially modulating illumination light, which is arranged so that the illumination light thus modulated is incident to each of the mirrors of the micro-mirror device, image input means for inputting a plurality of parallax images, and means for displaying a predetermined parallax image on the spatial light modulation element, based on the parallax images inputted by the image input means, and for controlling a direction of each mirror of the micro-mirror device to an angle of reflection of reflected light toward the parallax image, and an image display device permitting the stereoscopic vision of "super-multiview regions" can be constructed by using this display device as the image display means and the exit pupil position control means of the present invention.

For example, as illustrated in Fig. 21, the image displayed on the image display device is imaged on the micro-mirror device through a lens or the like and it is used as the image information 1 presented to the observer. By well controlling angles of the individual mirrors of the micro-mirror device, adjustment can be made so that the light to form the image information 1 can emerge from the exit pupil 3 near the pupil of the observer 4 as illustrated.

The position of the exit pupil 3 can be moved as in Figs. 4 to 7, by varying the angles of the mirrors, and the stereoscopic display of "super-multiview regions" as the objective of the present invention can be implemented by carrying out the appropriate parallax image display on the image display device in synchronism with the movement of the pupil position.

The present invention thus permits the attainment of the image input apparatus and image display apparatus capable of readily performing the recording and display of stereoscopic image and permitting the observer to observe the stereoscopic image in a good state without feeling fatigued.

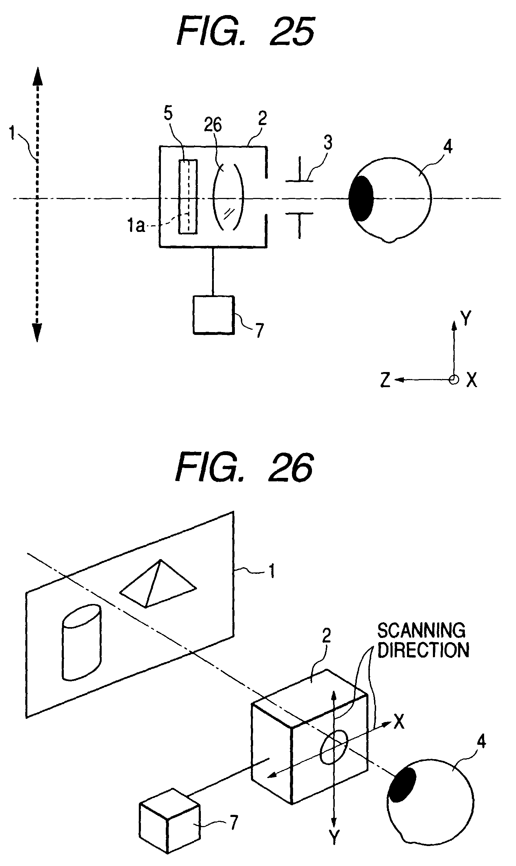

Fig. 25 is an explanatory diagram (plan view) to illustrate the fundamental concept of the image display apparatus according to a further embodiment of the present invention. In Fig. 25 numeral 2 designates an optical system, which has an image display generating means (image information generating means) 5 and a lens (display optical system) 26 composed of a single lens or plural lenses. Numeral 1 designates a virtual image (image information) indicated for the observer by the optical system 2 from image information 1a formed by the image display generating means 5. Numeral 3 represents a hypothetical symbol for the exit pupil of the optical system 2, which is aligned approximately with the pupil position of the observer's eye 4 and the exit pupil diameter of which is designed to be smaller than the pupil diameter of the eye 4. The observer's eye 4 observes the image information 1 of the virtual image through this exit pupil 3.

Numeral 7 indicates an actuator (scanning means) for moving and controlling the optical system 2 in the X- and Y-directions. The image information generating means 5 is constructed of a liquid crystal display or the like.

Fig. 26 is a perspective view of the image display apparatus of Fig. 25. Fig. 26 shows a state in which the optical system 2 is moved and controlled two-dimensionally in the X- and Y-directions by the actuator 7. The actuator 7 moves the optical system 2 across the pupil plane of the observer's eye 4 so that the exit pupil 3 of the optical system 2 scans on the pupil plane of the eye 4.

It is noted that a movable mirror or the like may also be used as the means for scanning of the exit pupil.

As illustrated in Fig. 3, a head-mounted display (HMD) can be constructed by placing two image display devices in the structure illustrated in Fig. 25 for the left and right eyes of the observer and mounting the devices themselves on the observer's head through a belt, as illustrated, in the fixed relation between the image display devices and the observer's pupils.

The image information generating means of the left and right image display devices are designed to generate and display the image information in synchronism with each other. In the present embodiment, the binocular parallax images may also be displayed independently as the image information displayed on the left and right image display devices, whereby the observer can observe a three-dimensional image.

In the present embodiment the optical system 2 is mechanically moved and controlled to scan the eye 4 of the observer with the exit pupil 3 of the optical system 2 in the horizontal direction or in the direction normal to the horizontal direction, thereby generating the parallax images in the single eye 4.

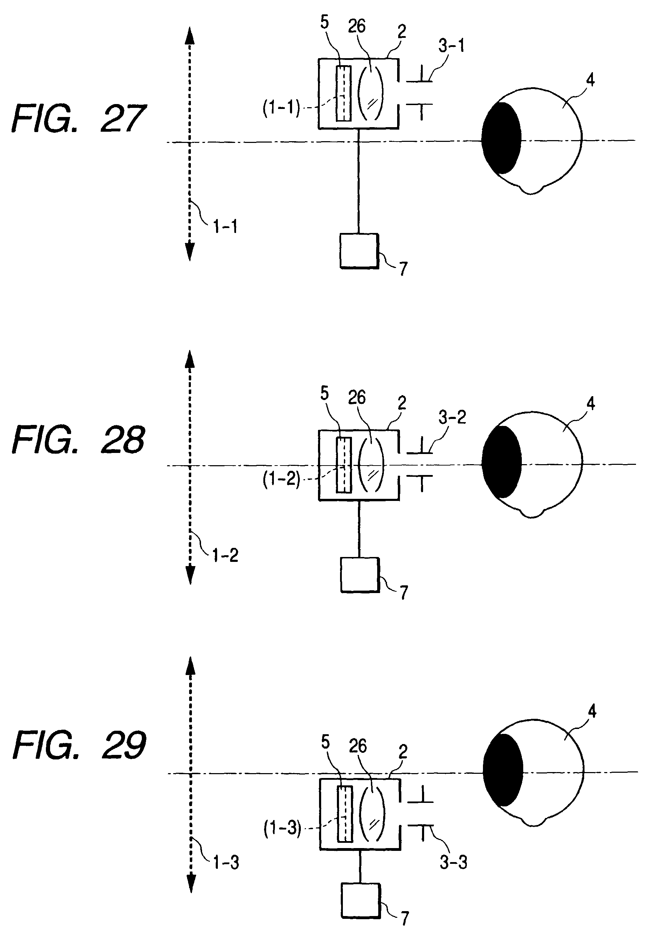

Fig. 27 to Fig. 29 are explanatory diagrams to illustrate how to present the parallax image in the observer's single eye 4. In Fig. 27 the optical system 2 forms the exit pupil 3-1. At this time the image information generating means 5 selects and displays the image information (1-1) as a corresponding image. The observer observes the image information 1-1 of a virtual image. After a lapse of an infinitesimal time, the optical system 2 forms the exit pupil 3-2 as illustrated in Fig. 28.

At this time the image information generating means 5 switches to display the image information (1-2) as a corresponding image. Then the observer observes the image information 1-2 of a virtual image. Similarly, the optical system 2 switches to display the image information (1-3) corresponding to formation of the exit pupil 3-3 as illustrated in Fig. 29. Then the observer observes the image information 1-3 of a virtual image.

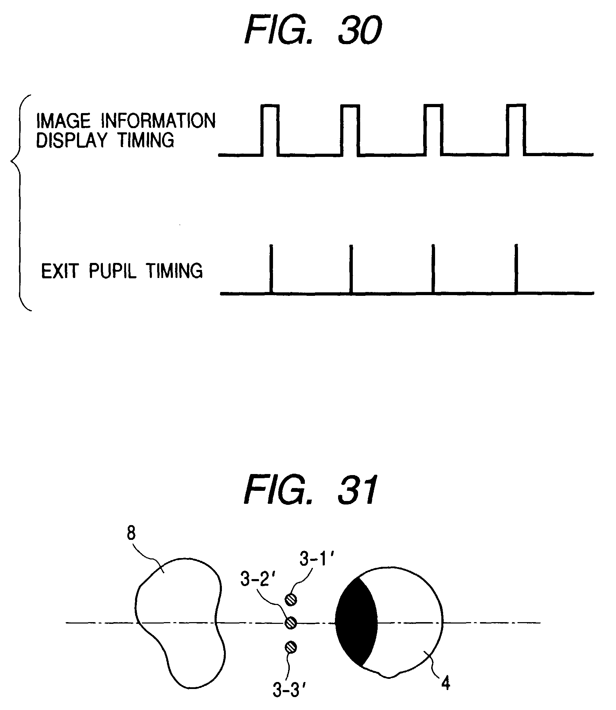

Fig. 30 is a timing chart to show the timing of the display of the image information 1 (1-1 to 1-3) by the image information generating means 5 and the timing of the formation of the exit pupil 3 (3-1 to 3-3). As illustrated, the positions of the exit pupil 3 are in one-to-one correspondence to the image information 1 displayed. Since the optical system 2 is moved mechanically and continuously, the exit pupil (3-1, 3-2, 3-3) illustrated in Fig. 27 to Fig. 29 is formed instantaneously and the display of the image information at that time is also displayed instantaneously.

In the case that the image display generating means 5 is composed of an LCD, image information can be instantaneously displayed by flash-control of the back light thereof.

Since this switching operation is repeated in cycles shorter than the tolerance time of persistence of vision of the observer's eye, it is carried out without being perceived by the observer at all.

It can also be contemplated that the optical system 2 is moved intermittently and the image information generating means displays the image information, based thereon.

In the present embodiment the size of the exit pupil 3 is set so as to be smaller than the pupil diameter of the observer and the exit pupil is controlled so as to scan by the predetermined distance.

Therefore, the apparatus of the present embodiment can provide the three-dimensional display of "super-multiview regions" in which a plurality of parallax images are incident to the single eye of the observer as in the case of the prior art example described previously. For implementing such three-dimensional display, the small parallax image information is displayed according to the position of the exit pupil, with synchronism between the display of image information and the formation of exit pupil as described previously.

In this case, the small parallax images to be displayed are obtained as a series of parallax images of the object 8 from view points at the center positions 3-1' to 3-3' of the above exit pupils 3-1 to 3-3 as illustrated in Fig. 31. The parallax images may be obtained as actually taken images by use of the image pickup system or may be virtually generated by computation with the computer.

In the present embodiment, the above parallax images can also be obtained according to the example of the image pickup apparatus (image input apparatus) illustrated in Fig. 14 and Fig. 15.

Namely, the aperture positions 3-1'' and 3-2'' in Fig. 14 and Fig. 15 correspond to the exit pupils 3-1 and 3-2 (Fig. 27, Fig. 28) during reproduction of image and the images picked up through the respective openings are the small parallax images suitable for the three-dimensional reproduction of "super-multiview regions."

For example, the image (parallax image) picked up through the aperture 3-1'' as in Fig. 14 corresponds to the parallax image 1-1 in Fig. 27 and the image picked up through the aperture 3-2'' as in Fig. 15 to the parallax image 1-2 in Fig. 28.

The parallax images can be gained similarly by changing the apertures one from another.

The small parallax images thus obtained are sent together with the signals to define the correspondence to the aperture positions upon the image pickup to the image transmitting part or recording part (not illustrated) to be transmitted or recorded for the three-dimensional display apparatus of "super-multiview regions."

The actually taken data for the three-dimensional display apparatus of "super-multiview regions" is gained by use of the image pickup apparatus as described above. This data can also be obtained on a virtual basis by computation with the computer as described previously. In this case, the parallax images from a plurality of view points can be gained by computation with the computer according to the concept of Fig. 31.

In the present embodiment, the number of parallax images displayed in the single eye can be set to an arbitrary value by optionally setting the display positions of the exit pupil 3 and the display images, but the number of single-eye parallaxes practically realized is dependent mainly on the performance of the image generating means 5.

The shape of the exit pupil 3 can be any shape including a circle, an ellipse, a rectangle, a polygon, and so on.

It is common practice to set the exit pupil a little larger than the pupil diameter in order to be ready for the mount deviation and the ocular movement in the case of the image display apparatus of the head-mounted type.

In the present embodiment the scan range of the exit pupil 3 is set slightly greater than the pupil diameter, whereby the observer can observe the whole of the image information 1 even with fine deviation of the pupil position of the observer.

As described above, the present embodiment permits the observer to recognize the parallax images by scanning on the pupil plane of the eye 4 with the exit pupil 3 of the optical system 2 while switching the image information displayed on the image information generating means 5 in correspondence thereto (i.e., by displaying the image information with parallax while switching it). This implements the observation of three-dimensional image.

The present embodiment can readily realize the three-dimensional display of "super-multiview regions" by the smaller number of parallax images than in the prior art example.

For example, supposing that the image-observable range is W (°) about the screen center and that the display intervals of the parallax images are d (°), the number of parallax images is given by W/d. Since a plurality of parallax images have to be presented in the single eye in order to effect the three-dimensional display of "super-multiview regions," the angular intervals d must be set to a considerably small value.

For example, suppose that the observation distance is 500 mm, the pupil diameter of the observer is 4 mm, and the observation area is 30°. Then the intervals d need to be not more than 0.23° and the number of parallax images needs to be not less than 130. Since all these parallax images must be displayed within the after image tolerance time of the observer's eye, an extremely fast image information display means is needed.

For that reason, the apparatus has to be constructed using the special image information display means as in the prior art example and this gives rise to many practically unpreferred matters including the increase in the scale of apparatus and in difficulties of production and the speciality of image processing.

In contrast to it, since in the present embodiment the scan range of the exit pupil 3 of the optical system is fixed near the pupil position of the observer, the display region can be set a little larger than the observer's pupil, the display region is thus considerably smaller than the display region of the conventional example (Fig. 22), and the number of parallax images to be presented is decreased drastically.

As a consequence, the three-dimensional display of "super-multiview regions" can be implemented by using the apparatus close to the ordinary image display apparatus, and it can restrain the increase in the scale of apparatus and in the difficulties of production. In the present embodiment, as described above, the scan range of the exit pupil 3 is set to be slightly larger than the diameter of the observer's pupil in order to be ready for the mount deviation and the ocular movement.

### (Embodiment 5)

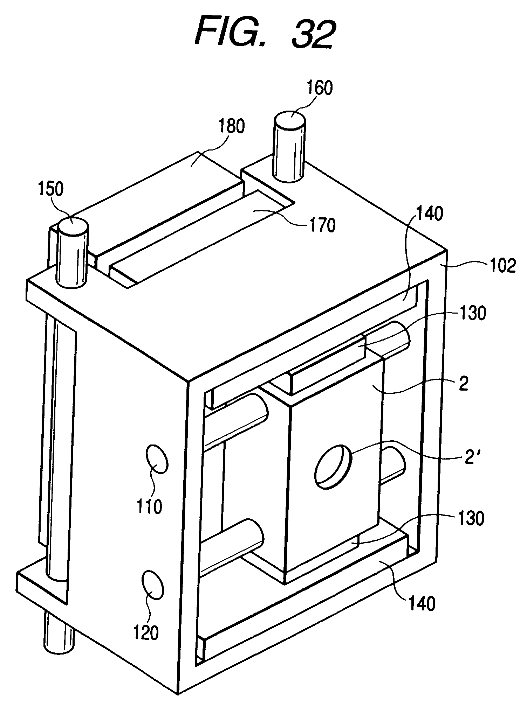

A specific configuration example of the present embodiment will be presented next. Fig. 32 is a mechanism diagram of Embodiment 5 of the present invention, in which the optical system 2 can be moved and controlled in the horizontal and vertical directions as illustrated in Fig. 26.

In the figure, numeral 2' designates an aperture of the optical system 2 and an exit pupil smaller than the diameter of the observer's pupil is formed at a predetermined distance apart from the opening 2'.

The optical system 2 is arranged to move translationally along guide shafts 110 and 120 mounted on a holder 102. The driving force for the translational motion is created by magnets 130 in the optical system 2 and coils 140 on the holder 102, and is controlled by a current or a voltage applied to the coils 140.

Further, as for the vertical direction, the holder 120 can be moved vertically along guide shafts 150 and 160 mounted on a housing (not illustrated), and the driving force therefor is generated by a magnet 170 on the holder 102 and a coil 180 on the housing and is controlled by a current or a voltage applied to the coil 180. The optical system 2 can be moved to predetermined positions by independently controlling the horizontal and vertical positions as described above and the single-eye parallax images are displayed by successively displaying the predetermined parallax images at the predetermined positions.

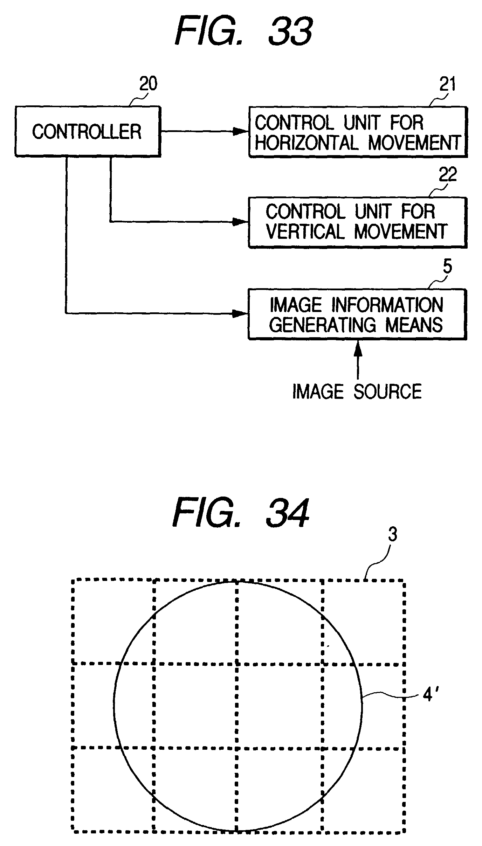

Fig. 33 is a block diagram to show the flow of control in the present Embodiment 5, in which a controller 20 performs the overall control. The controller 20 controls moving amounts of horizontal movement control unit 21 and vertical movement control unit 22 and also controls the display timing of the image information generating means 5.

According to the present embodiment, while the optical system having the exit pupil smaller than the observer's pupil is moved and controlled mechanically, the parallax images are generated at the predetermined positions of the optical system, whereby the plurality of parallax images are displayed in the single eye, so as to permit the observer to recognize a natural three-dimensional image.

### (Embodiment 6)

Embodiment 6 of the present invention will be described below. When the apparatus is allowed to perform the image information display by the image information generating means and the formation of the exit pupil of the optical system 2 at high speed, the larger the number of exit pupils formed, the more natural the three-dimensional image reproduced becomes, because the number of parallaxes in the single eye increases in the three-dimensional display of "super-multiview regions."

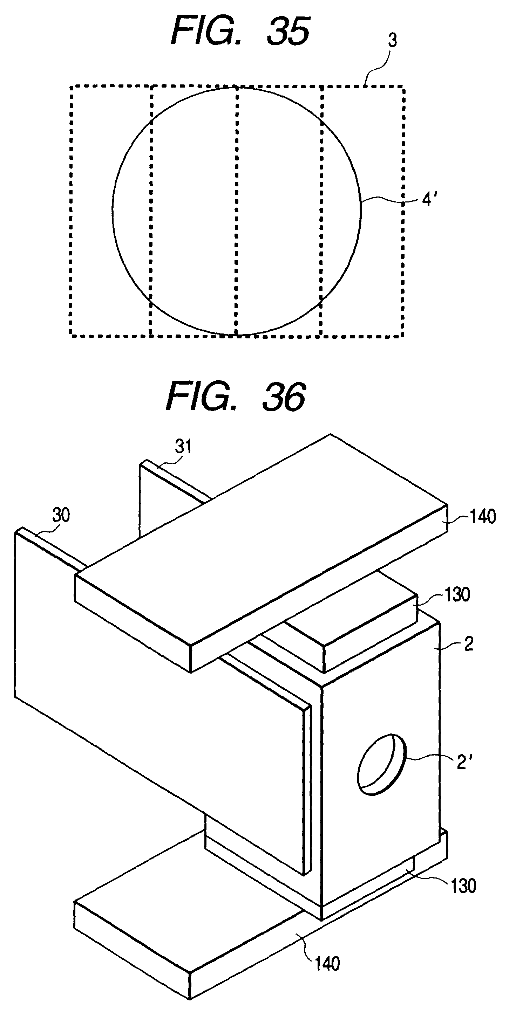

For example, in the case of three parallaxes vertical and four parallaxes horizontal as in Fig. 34, parallax images of about seven parallaxes (though the number differs more or less depending upon counting methods) can be presented in the pupil diameter 4'.

However, increase in the number of parallaxes in the single eye tends to pose the problem of insufficiency of the drawing performance and image information processing performance of the image information generating means 5 and insufficiency of the scanning performance of the optical system 2.

The above example requires at least twelve times the image drawing performance and image information processing performance of the ordinary two-dimensional image display means.

Therefore, the forming number of exit pupils is set as small as possible in the present embodiment. Since the effect of vertical parallax is smaller than the effect of horizontal parallax in three-dimensional vision, it is common practice to employ a technique of reducing the volume of information by eliminating the vertical parallaxes (which is a general technique, particularly, in the fields of holographic stereogram and real-time hologram).

In the present embodiment the exit pupils are thus generated only in the horizontal direction as illustrated in Fig. 35. This reduces the number of parallax images to be displayed, to four and thus greatly decreases the volume of image information as compared with the case including the vertical parallaxes. In the present embodiment the image drawing performance and the image information processing performance required for the image information generating means can be lowered to about four times those for the ordinary two-dimensional image display.

The number of horizontal parallax images can be any number not less than two.

A specific example of the present embodiment will be presented below. Fig. 36 is a mechanism diagram of the present embodiment. The present embodiment is different from Embodiment 5 in that the optical system 2 can be moved and controlled only in the horizontal direction, and the other structure is the same.

The driving force in the horizontal direction is generated by magnets 130 and coils 140, which is similar to that in Embodiment 5. A movable support mechanism in the horizontal direction is composed of parallel plate springs of thin metal plates (elastic members) 30, 31.

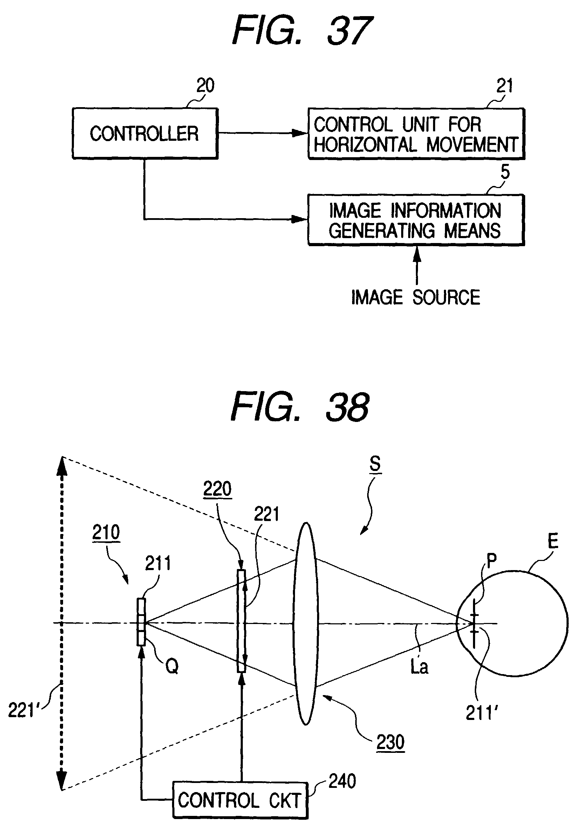

Fig. 37 is a block diagram to show the flow of control in Embodiment 6, which is different from Embodiment 5 in that the vertical movement control unit is excluded and thus the number of displayed parallax images is smaller. The other structure is the same as in Embodiment 5.

In the present embodiment the support mechanism described was that of slide support and parallel plate springs, but the support mechanism may be any other support mechanism such as parallel link support or the like. The driving mechanism can also be any other mechanism than the one using the coils and magnets.

The present invention can accomplish the image display apparatus capable of readily displaying the stereoscopic image and permitting the observer to observe the stereoscopic image in a good state without feeling fatigued.

Figs. 38 to 41 are explanatory diagrams to illustrate the basic concept of the optical system in the image display (observation) apparatus of the present invention. The image display apparatus S according to the present invention has an illumination means 210 including an illumination light source 211 consisting of a plurality of unit light sources (211a, 211b, 211c), an optical member (not illustrated), etc.; an image display means 220 for displaying image information 221; a display optical system 230 for forming an enlarged virtual image 221' of the image information 221; and a control means 240 for controlling the operation of the illumination means 210 and the image display means 220.

In Fig. 38, the illumination light source 211 constituting the illumination means 210 is placed at or near the entrance pupil position Q of the display optical system 230 and forms an image 211' of the illumination light source 211 at the position of the exit pupil P of the display optical system 230 kept in the conjugate relation with the entrance pupil Q by the display optical system 230.

The observer matches the entrance pupil of the eye E approximately with the exit pupil P of the display optical system 230 to observe the image (enlarged virtual image) 221' formed by the display optical system 230 from the image information 221 displayed on the image display means 220 illuminated by the illumination means 210. The position, the focal length, etc. of the display optical system 230 are determined so that the optical system 230 forms the enlarged virtual image of the display element surface of the image display means 220, for example, 2 m ahead of the eye E.

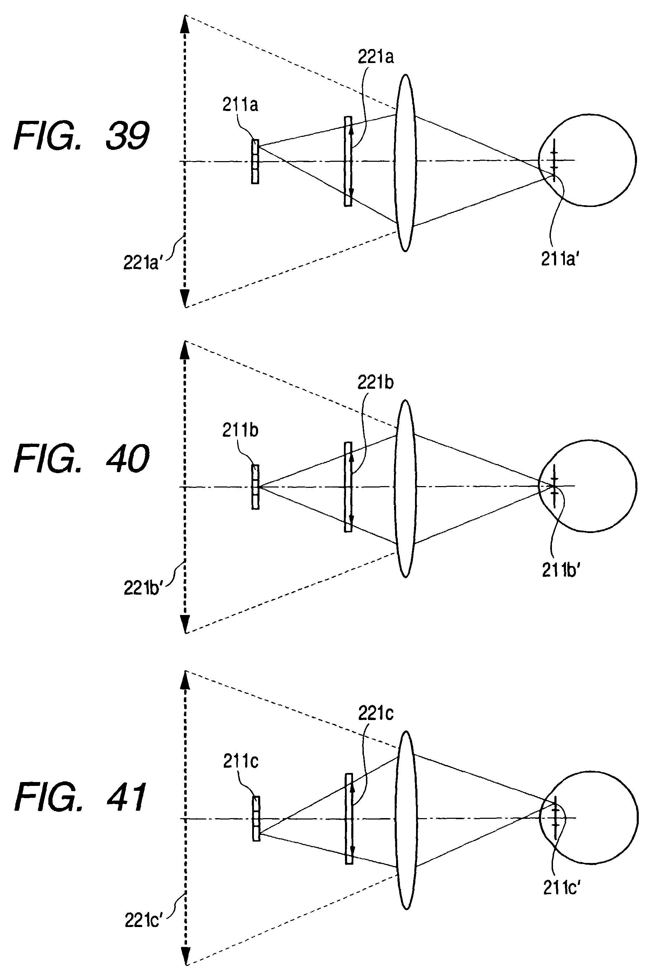

The illumination light source 211 consists of a plurality of unit light sources 211a, 211b, 211c arranged one-dimensionally or two-dimensionally in the direction normal to the optical axis La and the unit light sources are lighted up in order by the control means 240, as illustrated in Fig. 39, Fig. 40, and Fig. 41. The plurality of unit light sources 211a to 211c spatially divide the exit pupil P of the display optical system 230 into a plurality of illumination areas (211'a, 211'b, 211'c). Incidence of light to the respective illumination areas is controlled in a time-sharing manner by controlling emission of light from the plurality of unit light sources.

Each area has the width smaller than the pupil of the observer's eye E.

Each of the illumination areas (211'a, 211'b, 211'c) can be set in such a size (area) that the plurality of areas are formed on the pupil plane of the observer's eye.

At this time the control means 240 switches the image information displayed on the image display means 220 between the image information (parallax images) 221a, 221b, 221c of mutually different parallaxes in correspondence to switching of lighting of the above unit light sources. The image information (parallax images) 221a, 221b, 221c is parallax images of an object to be reproduced, taken from view points at the center positions of the respective areas 211'a, 211'b, 211'c. This permits the observer to observe a stereoscopic image.

The switching of the illumination light source 211 and the switching of the image information 221 in synchronism therewith by the control means 240 is repeated in cycles shorter than the tolerance time of persistence of vision for the observer's eye, whereby the switching operation will never be perceived by the observer.

In the present embodiment a pair of image display devices S are provided for the left and right eyes of the observer, as illustrated in Fig. 3, to be used as a head-mounted display apparatus (image observation system).

The above structure and control allow the plurality of parallax images to be entered into the observer's single eye in time series or simultaneously as described hereinafter, as in the aforementioned prior art example, thereby implementing the stereoscopic display of "super-multiview regions."

Since in the present embodiment the parallax images generated can effectively be provided into the observing eye, the number of parallax images generated can be decreased, thereby compactifying and simplifying the apparatus.

Specific embodiments of the present invention will be described hereinafter in order.

### (Embodiment 7)

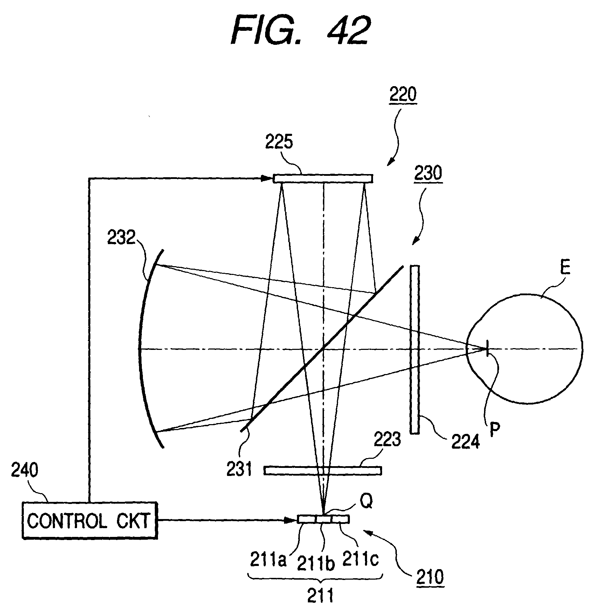

Fig. 42 is a schematic diagram to show the main part of Embodiment 7 of the image display apparatus of the present invention. The present image display apparatus has the illumination means 210 having the illumination light source 211, the image display means 220 having a display element 225 for displaying the image information including parallax images, the display optical system 230 including a concave mirror 232 of a spherical surface or an aspherical surface or the like for guiding the image information displayed on the image display means 220 illuminated by the light from the illumination means 210, to the observer's eye E, and the control means 240. The illumination optical system 211 consists of a plurality of unit light sources 211a, 211b, 211c.

Beams successively emitted in time series from the plurality of unit light sources 211a, 211b, 211c of the illumination light source 211 travel through a polarizer 223 to become linearly polarized light, part of which is transmitted by a half-silvered mirror 231 to be guided to the display element 225 of the image display means 220. The display element 225 is a reflective display device such as a reflective liquid crystal panel or the like having the pixel structure, which has the function of reflecting the linearly polarized light, for example, with rotating the direction of polarization of the light incident to pixels in "on" display portions by 90° but maintaining the direction of polarization of the light incident to pixels in "off" display portions.

The beams reflected by the display element 225 are reflected in part by the half-silvered mirror 231 and the reflected beams are then reflected by the concave mirror 232. The reflected beams are transmitted in part by the half-silvered mirror 231 to be guided to a polarizer 224. The polarizer 224 is placed so that its transmission polarization axis is perpendicular to that of the polarizer 223. Since the polarization direction of the reflected light from the pixels in the "on" display portions of the display element 225 is rotated by 90°, it travels through the polarizer 224 to be guided to the observer's eye E. However, since the polarization direction of the reflected light from the pixels in the "off" display portions of the display element 225 is maintained, the reflected light is intercepted by the polarizer 224 and thus does not enter the observer's eye E. The polarizer 224 also functions to intercept partly reflected light toward the observer's eye E after having been emitted from the illumination light source 211, having passed through the polarizer 223, and having been reflected by the half-silvered mirror 231, thereby preventing the reflected light from entering the observer's eye E.

The illumination light source 211 is located at the entrance pupil position Q of the display optical system 230 and the display optical system 230 forms an image of the illumination light source 211 at the position of the exit pupil P of the display optical system 230 kept in the conjugate relation with the entrance pupil thereby. This permits the exit pupil P to be spatially divided into a plurality of illumination areas (211'a to 211'c) by the plurality of unit light sources 211a to 211c.

The observer matches the entrance pupil of the eye E approximately with the exit pupil P of the display optical system 230 to observe the enlarged virtual image formed by the display optical system 230 from the image information displayed on the image display means 220 illuminated by the illumination light source 211. The position, the focal length, etc. of the display optical system 230 are determined so that the enlarged virtual image of the image information on the display element surface 225 of the image display means 220 is formed, for example, 2 m ahead of the eye.

A control circuit 240 performs control of appropriate time-division switching of the illumination light source 211 and the parallax images displayed on the display element 226 so as to time-serially input the plurality of parallax images into the single eye of the observer, based on the observation principles illustrated in Fig. 39 to Fig. 41, thereby implementing the stereoscopic display of "super-multiview regions."

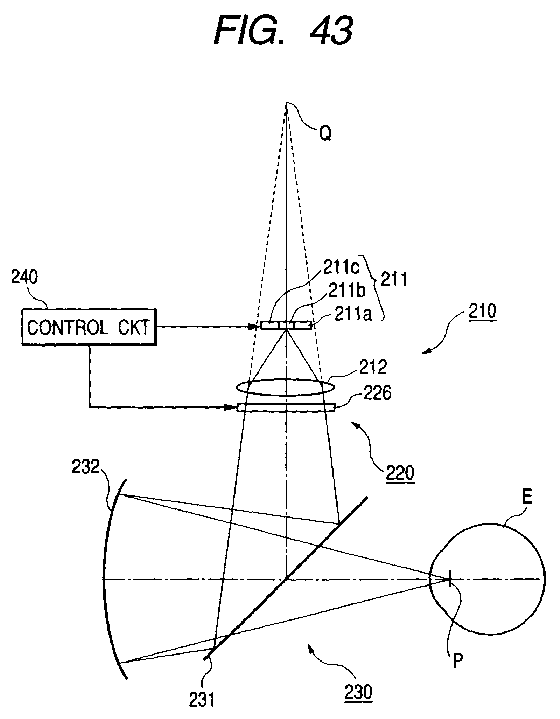

The embodiment illustrated in Fig. 42 employed the reflective liquid crystal panel as the display element of the display means 220, but a transmissive display element may also be employed as illustrated in Fig. 43.

In Fig. 43, the elements having the same functions as those in the embodiment illustrated in Fig. 42 are denoted by the same reference symbols and the description thereof is omitted herein. The illumination light emitted from the illumination light source 211 of the illumination means 210 is refracted by condenser lens 212 to be guided to the display element 226 of the display means 220. The display element 226 is a transmissive display device comprised of a polarizer and a transmissive liquid crystal panel or the like. The light transmitted by the display element 226 is guided through the display optical system 230 including the half-silvered mirror, the concave mirror, etc. to the observer's eye E. The focal length, the position, etc. of the condenser lens 212 are determined so that the image position of the illumination light source 211 formed by the condenser lens 212 is matched to the entrance pupil position Q of the display optical system 230. The display optical system 230 forms an image of the illumination light source 211 at the position of the exit pupil P thereof. The observer matches the entrance pupil of the eye E approximately with the exit pupil P of the display optical system 230 to observe the enlarged virtual image formed by the display optical system 230 from the image information displayed on the image display means 220 illuminated by the illumination light source 211.

The control circuit 240 performs the control of appropriate time-division switching of the illumination light source 211 and the display element 226 so as to input the plurality of parallax images into the single eye of the observer, based on the observation principles illustrated in Fig. 39 to Fig. 41, thereby permitting the stereoscopic display of "super-multiview regions."

### (Embodiment 8)

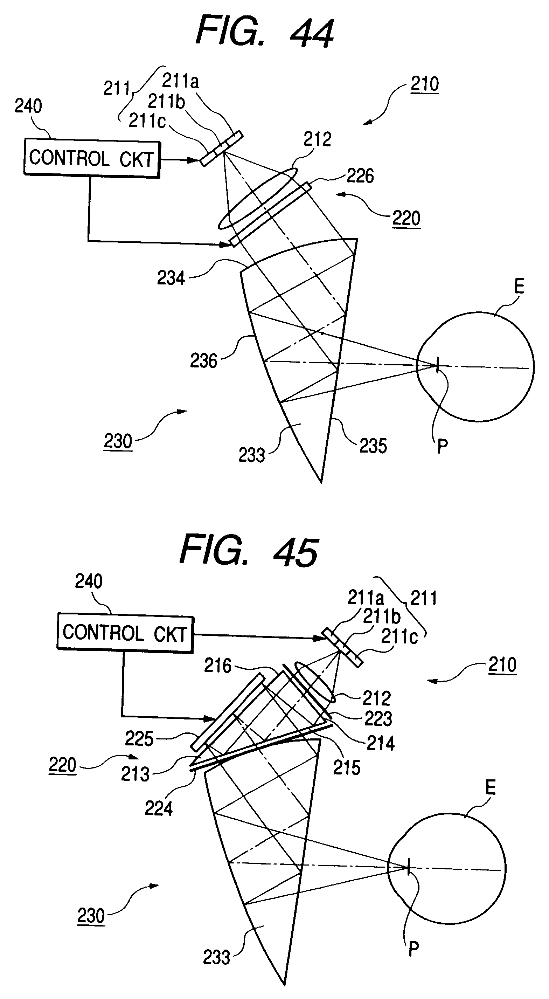

Fig. 44 is a schematic diagram to show the main part of Embodiment 8 of the image display apparatus of the present invention. Just as in Embodiment 7 illustrated in Fig. 43, the present image display apparatus has the illumination means 210 having the illumination light source 211, the image display means 220 having the display element 226 for displaying the image information including parallax images, the display optical system 230 including a prism body 233 for guiding the image information displayed on the image display means 220 illuminated by the light from the illumination means 210, to the observer's eye E, and the control means 240.

The elements having the same functions as those in the embodiment illustrated in Fig. 43 are denoted by the same reference symbols and the description thereof is omitted herein.

The illumination beams successively emitted in time series from the plurality of unit light sources (211a, 211b, 211c) of the illumination light source 211 are refracted by the condenser lens 212 to be guided to the display element 226 of the image display means 220. Beams transmitted by the display element 226 are incident to the prism body 233 while being refracted by a surface 234 thereof. The light incident to the prism body 233 is incident at angles of incidence over the critical angle to a surface 235 to be reflected totally thereby. The light is then reflected by a mirror surface 236 to be again incident at angles of incidence below the critical angle this time to the surface 235. The light emerges from the prism body 233 while being refracted. The emergent light is guided to the entrance pupil of the observer's eye E.

The prism body 233 of the present embodiment is constructed so as to include a decentered, rotationally asymmetric surface with optical powers differing depending upon azimuthal angles, in order-to correct well for aberration caused by the inclined arrangement of the surfaces having the optical power. This structure reduces the size of the display optical system 230. The position, the focal length, etc. of the prism body 233 are determined so that the enlarged virtual image of the display element surface 226 of the display means 220 is formed, for example, 2 m ahead of the eye E.

The display optical system 230 forms the image of the illumination light source 211, i.e., the images of the unit light sources 211a to 211c at the position of the exit pupil P. The observer matches the entrance pupil of the eye E approximately with the exit pupil P of the display optical system 230 to observe the enlarged virtual image formed by the display optical system 230 from the image information displayed on the image display means 220 illuminated by the illumination light source 211.

The control circuit 240 performs the control of appropriate time-division switching of the illumination light source 211 and the display element 226 so as to input the plurality of parallax images into the single eye of the observer, based on the observation principles illustrated in Fig. 39 to Fig. 41, thereby permitting the stereoscopic display of "super-multiview regions."

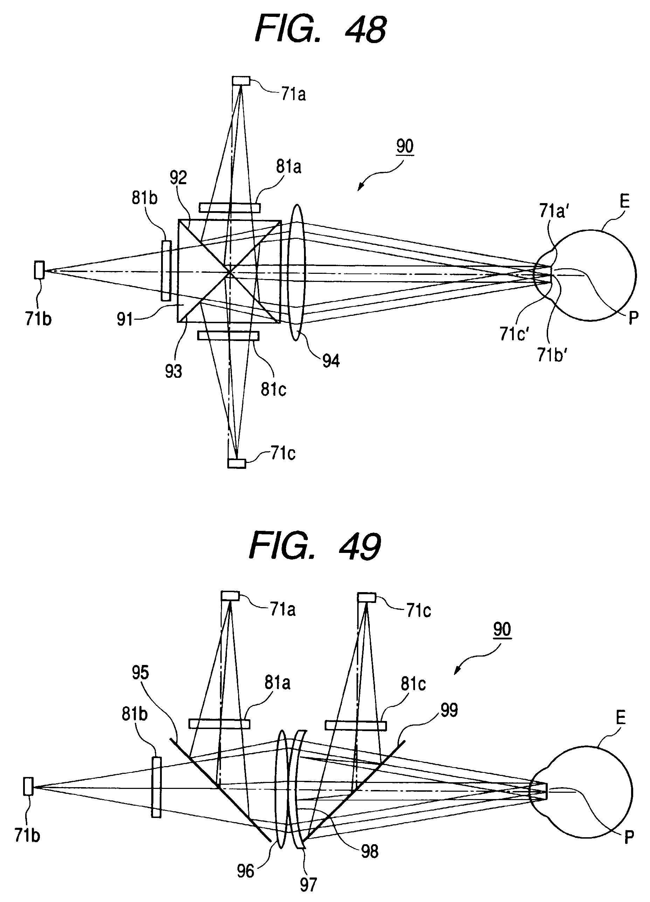

In the embodiment illustrated in Fig. 44, the display element of the display means 220 may be replaced by the reflective display element as illustrated in Fig. 45. The elements having the same functions as those in the embodiments illustrated in Fig. 42 and Fig. 48 are denoted by the same reference symbols and the description thereof is omitted herein.

In Fig. 45, the illumination light emitted from the illumination light source 211 of the illumination means 210 is refracted by the condenser lens 212 to travel through the polarizer 223 to become linearly polarized light. The linearly polarized light is incident to a prism 213 while being refracted by a surface 214 thereof. The prism 213 is a triangular prism consisting of planes or including a curved surface if necessary. The light incident to the prism 213 is incident at angles over the critical angle to a surface 215 to be reflected totally thereby. The reflected light then emerges from the prism 213 while being refracted by a surface 216 thereof. The emergent light is then incident to the reflective display element 225. The light reflected by the reflective display element 225 is incident to the prism 213 while being refracted by the surface 216. The light is again incident at angles below the critical angle to the surface 215 to emerge from the prism 213 while being refracted thereby. The emergent light is then incident to the polarizer 224.

Just as in the embodiment illustrated in Fig. 42, the polarizer 224 transmits the reflected light from pixels in "on" display portions in the display element 225 but intercepts the reflected light from pixels in "off" display portions in the display element 225. The light transmitted by the polarizer 224 is guided to the observer's eye E while being reflected and refracted by the prism body 233 having the optical action similar to that of the prism body 233 illustrated in Fig. 44.

The size of the apparatus is reduced by constructing the illumination means 210 by use of the total reflection in the prism 213.

The display optical system 230 forms an image of the illumination light source 211 at the position of the exit pupil P thereof. The observer matches the entrance pupil of the eye approximately with the exit pupil P of the display optical system 230 to observe the image formed by the display optical system 230 from the image information displayed on the image display means 220 illuminated by the illumination light source 211.

The control circuit 240 performs the control of appropriate time-division switching of the illumination light source 211 and the display element 225 so as to input the plurality of parallax images into the single eye of the observer, based on the observation principles illustrated in Fig. 39 to Fig. 41, thereby permitting the stereoscopic display of "super-multiview regions."

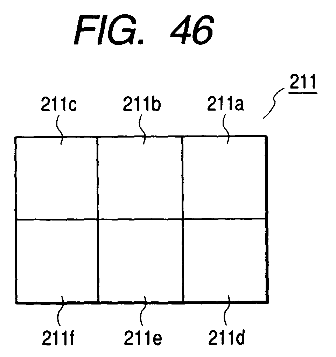

In each of the above embodiments illustrated in Fig. 42 to Fig. 45, the illumination means 210 has the illumination light source 211 consisting of a plurality of unit light sources 211a to 211f as illustrated in Fig. 46. The illumination light source 211 consists of (six in Fig. 46) unit light sources (211a to 211f) separated based on the area.

Fig. 46 shows the illumination light source 211 used when the parallax images of totally six parallaxes, three parallaxes in the horizontal direction and two parallaxes in the vertical direction, are presented to the observer's eye. The number of parallax images presented to the observer's eye is preferably set as large as possible within the switchable range of the illumination light source and the display element, and thus the present invention is not limited to this number. Since the effect of horizontal parallax is greater than that of vertical parallax in stereoscopic vision, the number of horizontal parallaxes is desirably set larger than the number of vertical parallaxes.

For this reason, more unit light sources are placed in the horizontal direction than in the vertical direction. In order to input the plurality of parallax images into the observer's eye, it is preferable to set the center spacing between images of the unit light sources 211a to 211f forming the illumination light source 211, to not more than 3 mm on the exit pupil P of the display optical system. If the size of the images of the illumination light source 211 is too large on the exit pupil P of the display optical system, it will become necessary to set the number of unit light sources and the number of parallax images very large by that degree, which will result in increasing the complexity and the scale of the apparatus. In order to input the parallax images effectively into the observer's eye, the size of the images of the illumination light source 211 formed on the exit pupil P of the display optical system is thus desirably not more than 20 mm in the horizontal direction, taking the ocular movement of the observer's eye etc. into consideration. Therefore, the size of the exit pupil of the display optical system is desirably set a little larger than the size of the images of the illumination light, specifically, not more than 30 mm in the horizontal direction, also taking the adjustment range etc. into consideration. The pupil diameter of the display optical system, the pupil image magnification, the sizes of the illumination light source and the unit light sources, etc. are determined based on these conditions.

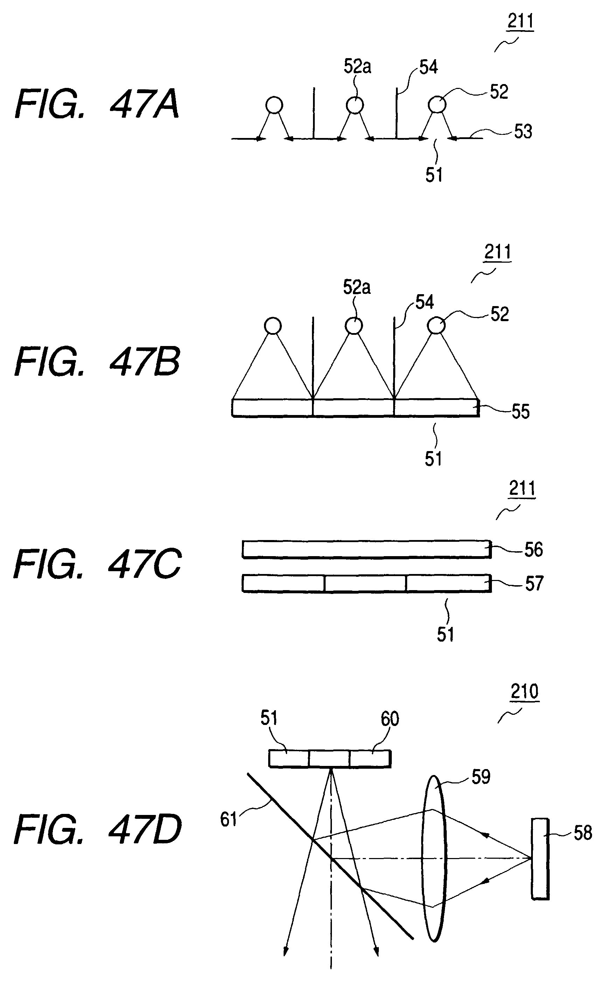

The illumination light source 211 is constructed of an emitter array such as an EL panel or an LED array, or has either of the structures as illustrated in Figs. 47A, 47B, 47C, and 47D or the like.

In Fig. 47A, a unit light source 51 is composed of a light emitter 52 and a pinhole 53 under illumination with light therefrom. A shield plate 54 is provided for preventing light from the emitter 52a of an adjacent unit light source from leaking in.

In Fig. 47B, a unit light source 51 is constructed of a diffuser 55 illuminated by the light emitter 52. A shield plate 54 is provided for preventing the light from the adjacent emitter 52a from leaking in.

In Fig. 47C, the illumination light source 211 is composed of a surface emission light source 56 consisting of a cold-cathode tube and a lightguide plate or the like, and a transmissive, spatial light modulator 57 such as a transmissive liquid crystal panel or the like. A unit light source 51 is comprised of one pixel or several pixels of the transmissive, spatial light modulator 57.

In Fig. 47D, the illumination means 210 is composed of a surface emission light source 58, a lens 59, a half-silvered mirror 61, and a reflective, spatial light modulator 60 such as a reflective liquid crystal panel or the like. The illumination light source 11 includes elements 58, 60, and so on. One unit light source 51 out of a plurality of unit light sources forming the illumination light source 11 is comprised of one pixel or several pixels of the reflective, spatial light modulator 60.

In Fig. 47D light from the surface emission light source 58 is condensed by the lens 59 and then is reflected by the half-silvered mirror 61 to form a light source image on the spatial light modulator 60. Light modulated and reflected in a part of the spatial light modulator 60 including a predetermined number of pixels (51) is extracted through the half-silvered mirror 61 to be used as one illumination light source 51.

The plurality of unit light sources separated based on the area are realized by constructing the illumination means as described above. The shape of so the unit light sources does not always have to be rectangular as illustrated, but may be circular, elliptic, or polygonal.

In the embodiments illustrated in Fig. 42 to Fig. 45, the illumination light source 210 and the display element 221 were subjected to the high-speed time-division switching control in order to input the plurality of parallax images into the observer's eye, but the effect similar thereto can also be achieved by providing a plurality of display means 220 and simultaneously inputting the plurality of parallax images into the single eye without the time-division switching control.

### (Embodiment 9)

Fig. 48 is a schematic diagram to show the main part of Embodiment 9 of the image display apparatus according to the present invention. The present image display apparatus has a plurality of unit light sources 71a, 71b, and 71c, a plurality of display devices 81a, 81b, and 81c corresponding to the respective unit light sources, and a display optical system 90.

The display optical system 90 has a cross prism 91 and an optical element 94. The plurality of unit light sources 71a to 71c are placed in a state in which optical paths thereof, when expanded, are shifted from each other in the direction normal to the optical axis. Light emitted from the unit light source 71a travels through the transmissive display element 81a, such as a transmissive liquid crystal panel or the like, to enter the cross prism 91. A half-mirror coat is formed on each of joint surfaces 92, 93 of the cross prism 91.

The light incident to the cross prism 91 is reflected in part by the surface 92 and the reflected light emerges from the cross prism 91. The emergent light is guided to the observing eye E while being converged by the optical element 94 having a positive optical power. The illumination light source 71a is located at the entrance pupil position of the display optical system 90 and the display optical system 90 forms an image 71a' of the illumination light source 71a on the exit pupil P thereof.

Similarly, light emitted from the unit light source 71b or 71c illuminates the transmissive display element 81b or 81c, respectively, to be guided through the display optical system 90 to the observing eye E. The display optical system 90 forms an image 71b', 71c' of the unit light source 71b, 71c on the exit pupil P thereof.

The observer matches the entrance pupil of the eye E approximately with the exit pupil P of the display optical system 90 to observe the enlarged virtual images formed by the display optical system 90 from the image information displayed on the transmissive display elements 81a, 81b, 81c illuminated by the unit light sources 71a, 71b, 71c. The position, the focal length, etc. of the display optical system 90 are determined so that the enlarged virtual images of the display element surfaces of the transmissive display elements 81a, 81b, 81c are formed in front of the eye E, for example, 2 m ahead.

The control means not illustrated can input the plurality of parallax images simultaneously into the single eye of the observer by simultaneously switching the unit light sources 71a, 71b, 71c on and displaying the parallax images corresponding to the images 71a', 71b', 71c' of the respective unit light sources on the transmissive display elements 81a, 81b, 81c, and thereby permits the stereoscopic display of "super-multiview regions."

By providing a plurality of display units and illumination units for illuminating the respective display units as described above, the stereoscopic display of "super-multiview regions" can be implemented without use of high-speed image display means.

In the present embodiment, the plurality of unit light sources may be modified so as to be switched on in time series.

Fig. 49 is an explanatory diagram to show another example of the display optical system 90 in the present embodiment. In Fig. 49 the elements having the same functions as those in the embodiment illustrated in Fig. 48 are denoted by the same reference symbols and the description thereof is omitted herein.

The light emitted from the unit light source 71a travels through the transmissive display element 81a to be reflected in part by a half-silvered mirror 95. The reflected light is transmitted in part by a half-silvered mirror 99 while being converged by optical elements 96, 97. The convergent beam is guided to the pupil of the observing eye E. A half-mirror coat is formed on a surface 98 forming the optical element 97. The light emitted from the unit light source 71b travels through the transmissive display element 81b to be transmitted in part by the half-silvered mirror 95. The transmitted light travels through the optical elements 96, 97 and through the half-silvered mirror 99 to be guided to the pupil of the observing eye E, as in the case of use of the unit light source 71a.

The light emitted from the unit light source 71c travels through the transmissive display element 81c to be reflected In part by the half mirror 99. The reflected light is reflected and converged by the half-mirror surface 98 having a positive optical power on the optical element 97 and then is transmitted again by the half mirror 99 to be guided to the pupil of the observing eye E. The relative positional relation among the illumination light sources, the display elements, the display optical system, and the observing eye is the same as in the embodiment illustrated in Fig. 48. As described, the present invention forces no restrictions on the form of the display optical system 90.

In Fig. 48 and Fig. 49, it is also possible to increase the number of parallax images presented to the observing eye, by constructing the unit light sources 71a, 71b, 71c of the plurality of unit light sources as illustrated in Fig. 46, further driving the display elements 81a, 81b, 81c in a time-sharing manner, and properly controlling lighting of the unit light sources and the display images on the display elements.

### (Embodiment 10)

Embodiment 10 of the image display apparatus of the present invention will be described below.

There are conventionally known techniques of realizing the color display by switching colors (R, G, B) of the illumination light sources by use of a reflective, monochromatic panel (spatial light modulator of a single color) capable of driving at high speed and by displaying corresponding display images in synchronism therewith.

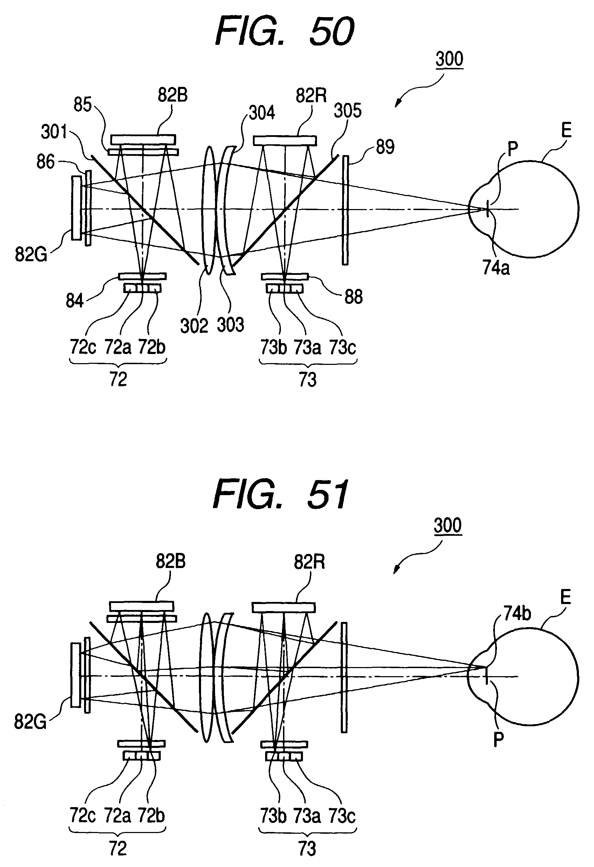

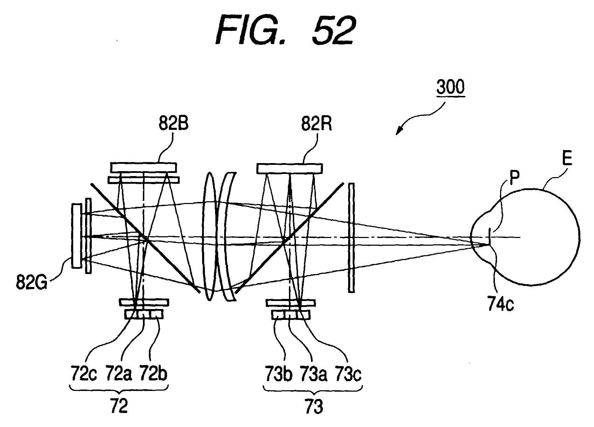

In the present embodiment the image display apparatus is constructed using such display elements, as illustrated in Fig. 50, Fig. 51, and Fig. 52.

Fig. 50, Fig. 51, and Fig. 52 are schematic diagrams to show the main part of Embodiment 10 of the image display apparatus according to the present invention. The present image display apparatus has illumination light sources 72, 73 each constructed of a plurality of unit light sources as illustrated in Fig. 44, reflective, monochromatic panels (image display means) 82R, 82G, 82B capable of driving at high speed as described above, and a display optical system 300.

The illumination light source 72 is an illumination light source emitting the illumination light including blue light and green light, and the illumination light source 73 an illumination light source emitting red light. A dichroic filter reflecting the red light but transmitting the blue light and green light is formed on a surface 304 forming an optical element 303.

The light emitted from the illumination light source 72 travels through a polarizer 84 to become linearly polarized light. The linearly polarized light is transmitted in part by a half-silvered mirror 301. The transmitted light travels through a blue filter 85 absorbing the light other than the blue light to turn into blue light. The blue light is guided to the reflective monochromatic panel 82B. The reflective monochromatic panel 82B is a reflective display element such as a reflective liquid crystal panel or the like having the pixel structure, which has the function of reflecting the linearly polarized light, for example, so as to rotate the direction of polarization of the light incident to pixels in "on" display portions by 90° but maintain the direction of polarization of the light incident to pixels in "off" display portions.

The blue light reflected by the reflective monochromatic panel 82B is transmitted by the blue color filter 85 and is reflected in part by the half mirror 301. The reflected light travels through the dichroic filter surface 304 while being converged by optical elements 302, 303 having a positive optical power. The converging light is transmitted by a half-silvered mirror 305 to be guided to a polarizer 89. The polarizer 89 is placed so that the transmission polarization axis thereof is perpendicular to that of the polarizer 84.

Since the polarization direction of the reflected light from the pixels in the "on" display portions of the reflective monochromatic panel 82B undergoes 90° rotation, it travels through the polarizer 89 to be guided to the observing eye E. However, since the polarization direction of the reflected light from the pixels in the "off" display portions of the reflective monochromatic panel 82B is maintained, the reflected light is intercepted by the polarizer 89 to be prevented from entering the observing eye E.

On the other hand, the light emitted from the illumination light source 72, transmitted by the polarizer 84, and reflected by the half mirror 301 travels through a green filter 86 absorbing the light other than the green light to turn into green light to be guided to the reflective monochromatic panel 82G. The green light reflected by the reflective monochromatic panel 82G is transmitted by the green color filter 86 and is transmitted in part by the half mirror 301. The transmitted light is then transmitted by the dichroic filter surface 304 while being converged by the optical elements 302, 303 having the positive optical power. The convergent light is then transmitted by the half mirror 305 to be guided to the polarizer 89.

According to the principle similar to that of the blue light described above, only the reflected light from pixels in "on" display portions of the reflective monochromatic panel 82G is transmitted by the polarizer 89 to enter the observing eye E.

On the other hand, the red light emitted from the illumination light source 73 is transmitted by a polarizer 88 with the transmission polarization axis matched with that of the polarizer 84 to turn into linearly polarized light. The linearly polarized light is transmitted in part by the half mirror 305 to be guided to the reflective monochromatic panel 82R. The red light reflected by the reflective monochromatic panel 82R is reflected in part by the half mirror 305 and the reflected light is then reflected and converged by the dichroic filter surface 304 having the positive optical power. The convergent light is transmitted again by the half mirror 305 to be guided to the polarizer 89.

According to the principle similar to that of the blue light described above, only the reflected light from pixels in "on" display portions of the reflective monochromatic panel 82R is transmitted by the polarizer 89 to enter the observing eye E.

The illumination light sources 72, 73 are located at the entrance pupil position of the display optical system 300 and the display optical system 300 forms images of the illumination light sources 72, 73 on the exit pupil P thereof.

The observer matches the entrance pupil of the eye E approximately with the exit pupil P of the display optical system 300 to observe the enlarged virtual images formed by the display optical system 300 from the image information displayed on the reflective monochromatic panels 82R, 82G, 82B illuminated by the illumination light sources 72, 73. The position, the focal length, etc. of the display optical system 300 are determined so that the enlarged virtual images of the display element surfaces of the reflective monochromatic panels 82R, 82G, 82B are formed in front of the eye E, for example, 2 m ahead.

The illumination light source 72 is composed of a plurality of unit light sources 72a, 72b, 72c as illustrated in Fig. 46 and the unit light sources are successively switched on by the unrepresented control means as illustrated in Fig. 50, Fig. 51, and Fig. 52. Similarly, the illumination light source 73 is also composed of a plurality of unit light sources 73a, 73b, 73c and the unit light sources are also successively switched on as illustrated in Fig. 50, Fig. 51, and Fig. 52. This spatially divides the exit pupil P of the display optical system 300 into a plurality of illumination areas (74a, 74b, 74c) and permits the time-division control of beams into the respective illumination areas. At this time the control means switches the image information displayed on the image display elements 82R, 82G, 82B to the corresponding parallax images, based on the positions of the respective illumination areas and the color information of the illumination light, in synchronism with the above switching of the light sources.

In the case of use of the monochromatic panels, as described above, a plurality of color parallax images can be inputted into the single eye of the observer, based on the principles illustrated in Fig. 39 to Fig. 41, by employing the above structure and the appropriate time-division switching control of the illumination light sources 72, 73 and the display elements 82R, 82G, 82B. This implements the stereoscopic display of "super-multiview regions."

The present invention can thus accomplish the image display apparatus capable of readily performing the display of stereoscopic image and permitting the observer to observe the stereoscopic image in a good condition without feeling fatigued.

In addition, the structures as described above according to the present invention permit the stereoscopic display of "super-multiview regions" without use of very fast image display means and image generating means and without use of many image display means, and the image display apparatus can be accomplished in the simple and compact structure.

An image display apparatus has an image display for displaying a parallax image, and a display optical system for guiding light from the image display to the position of the exit pupil. The exit pupil is spatially and temporally divided into a plurality of areas, a passing beam to each area is controlled, and control is effected on switching between parallax images on the image display means corresponding to passing beams through the respective areas of the exit pupil, whereby a plurality of parallax images are perceived by a single eye of an observer.

## Claims

1. An image display apparatus comprising image display means for displaying a parallax image, a display optical system for guiding light from the image display means to a position of an exit pupil, exit pupil control means for spatially and temporally dividing the exit pupil into a plurality of areas and controlling a passing beam to each area, and image switching control means for controlling switching between parallax images of the image display means in correspondence to passing beams through the respective areas of the exit pupil, wherein a plurality of parallax images are perceived by a single eye of an observer.

2. An image display apparatus comprising image display means for displaying a parallax image, a display optical system for guiding light from the image display means to a position of an exit pupil, and exit pupil control means for controlling a position or a size of the exit pupil in a direction perpendicular to the optical axis, dividing the exit pupil into a plurality of areas, and successively generating the plurality of divided areas of the exit pupil without duplication, wherein the image display means successively displays corresponding parallax images according to beams passing the respective areas thus generated.

3. The image display apparatus according to Claim 1 or 2, wherein said exit pupil has a diameter two to five times larger than a diameter of the pupil of the observer using said image display apparatus.

4. The image display apparatus according to Claim 1 or 2, wherein any one of the plurality of areas in said exit pupil has a size not more than half a size of the pupil of the observer using said image display apparatus.

5. The image display apparatus according to Claim 1 or 2, said image display apparatus being mounted on the head of the observer, wherein said exit pupil is fixed at the position of the pupil of the observer.

6. The image display apparatus according to Claim 1 or 2, wherein said exit pupil is divided into a plurality of areas only in the horizontal direction.

7. The image display apparatus according to Claim 1 or 2, wherein said image display means comprises a transmissive spatial light modulator and said exit pupil control means comprises a self-emissive spatial light modulator.

8. The image display apparatus according to Claim 1 or 2, wherein said image display means comprises a self-emissive spatial light modulator and said exit pupil control means comprises a transmissive spatial light modulator.

9. The image display apparatus according to Claim 1 or 2, wherein each of said image display means and said exit pupil control means comprises a transmissive spatial light modulator.

10. The image display apparatus according to Claim 1 or 2, wherein said exit pupil control means comprises a micro-mirror device.

11. An image display apparatus comprising image display means for displaying a parallax image, a display optical system for guiding light from the image display means to a dividing aperture, said dividing aperture having a plurality of apertures, wherein an arbitrary aperture out of the plurality of apertures is selected as a passing area of light, and control means for controlling a position of the light-passing aperture in the dividing aperture and the parallax image displayed on the image display means.

12. The image display apparatus according to Claim 11, wherein said dividing aperture has a diameter two to five times larger than a diameter of the pupil of the observer using said image display apparatus.

13. The image display apparatus according to Claim 11, wherein any one of the plurality of apertures in said dividing aperture has a size not more than half a size of the pupil of the observer using said image display apparatus.

14. The image display apparatus according to Claim 11, said image display apparatus being mounted on the head of the observer, wherein said dividing aperture is fixed at the position of the pupil of the observer.

15. The image display apparatus according to Claim 11, wherein said dividing aperture is divided into a plurality of apertures only in the horizontal direction.

16. The image display apparatus according to Claim 11, wherein said image display means comprises a transmissive spatial light modulator and said dividing aperture comprises a self-emissive spatial light modulator.

17. The image display apparatus according to Claim 11, wherein said image display means comprises a self-emissive spatial light modulator and said dividing aperture comprises a transmissive spatial light modulator.

18. The image display apparatus according to Claim 11, wherein each of said image display means and said dividing aperture comprises a transmissive spatial light modulator.

19. An image input apparatus comprising imaging means for imaging an object, an imaging optical system for guiding light from the object to the imaging means, aperture generating means for spatially and temporally dividing a pupil of the imaging optical system into a plurality of areas and controlling a passing beam to each area, and control means for controlling switching between parallax images taken by the imaging means in correspondence to the respective areas of the pupil so as to effect input of the parallax images.

20. An image input apparatus comprising imaging means for imaging object information, an imaging optical system for guiding light from an object to the imaging means, aperture generating means for controlling a position or a size of a pupil of the imaging optical system, dividing the pupil into a plurality of areas, and limiting a beam-passing area, and control means for making the imaging means successively take corresponding parallax images according to positions of the aperture of the pupil.

21. The image input apparatus according to Claim 19 or 20, wherein said pupil is divided into a plurality of areas only in the horizontal direction.

22. The image input apparatus according to Claim 19 or 20, wherein said aperture generating means comprises a transmissive spatial light modulator.

23. A stereoscopic display system comprising the image display apparatus as set forth in either one of Claims 1 to 18, and the image input apparatus as set forth in either one of Claims 19 to 22.

24. A stereoscopic display system comprising imaging means for imaging an object, an imaging optical system for guiding light from the object to the imaging means, aperture generating means for spatially and temporally dividing a pupil of the imaging optical system into a plurality of areas and controlling a passing beam to each area, control means for controlling switching between parallax images taken by the imaging means in correspondence to the respective areas of the pupil so as to effect input of the parallax images, image display means for displaying a parallax image, a display optical system for guiding light from the image display means to a position of an exit pupil, exit pupil control means for spatially and temporally dividing the exit pupil into a plurality of areas and controlling a passing beam to each area, and image switching control means for controlling switching of the parallax images taken by the imaging means, to the parallax images on the image display means in correspondence to passing beams through the respective areas, wherein a plurality of parallax images are perceived by a single eye of an observer.

25. The stereoscopic display system according to Claim 23, wherein a position and a size of the pupil of said imaging optical system are approximately equal to those of said exit pupil.

26. An image display apparatus wherein an optical system comprising image information generating means for displaying a parallax image and a display optical system for guiding light from the image information generating means to a pupil of an observer is moved to scan in front of the pupil of the observer by scanning means whereby a plurality of parallax images are perceived by a single eye of the observer.

27. The image display apparatus according to Claim 26, wherein said display optical system sets a diameter of an exit pupil thereof smaller than a diameter of the pupil of the observer.

28. The image display apparatus according to Claim 26 or 27, wherein said scanning means moves said optical system to scan across the pupil in front of the pupil of the observer.

29. The image display apparatus according to Claim 28, wherein said optical system is moved to scan only in the horizontal direction.

30. The image display apparatus according to Claim 28, wherein said optical system is moved to scan in the horizontal direction and in the vertical direction.

31. The image display apparatus according to Claim 26, 27, or 28, wherein one cycle of scanning effected by said scanning means is within a time of persistence of vision for.

32. The image display apparatus according to Claim 26, 27, or 28, wherein said image information generating means displays different parallax images corresponding to said scan.

33. The image display apparatus according to Claim 26, 27, or 28, said image display apparatus being mounted on the head of the observer, wherein said exit pupil is fixed so as to be matched with the position of the pupil of the observer.

34. An image display apparatus comprising image display means capable of displaying image information with parallax, illumination means having an illumination light source for illuminating the image display means, and a display optical system for guiding light from the image display means to an observing eye, in which the illumination light source is located at or near a position optically equivalent to an entrance pupil of the display optical system and in which the image information is observed while a position of an exit pupil of the display optical system is approximately matched with a position of an entrance pupil of the observing eye, wherein the illumination light source comprises a plurality of unit light sources, wherein images of the unit light sources spatially divide the exit pupil of the display optical system into a plurality of illumination areas, and wherein a plurality of parallax images are made incident in time series into a single eye of an observer by making use of control means for time-divisionally controlling radiation of light from the plurality of unit light sources so as to control time division of the exit pupil of the display optical system into the plurality of illumination areas and for controlling switching between image information displayed on the image display means in correspondence to circumstances of incidence of light to the respective illumination areas.

35. An image display apparatus comprising a plurality of image display means capable of displaying image information with parallax, at least one illumination means having an illumination light source for illuminating the plurality of image display means, and a display optical system for guiding light from the plurality of image display means to an observing eye, in which the illumination light source is located at or near a position optically equivalent to an entrance pupil of the display optical system and in which a position of an exit pupil of the display optical system is approximately matched with a position of an entrance pupil of the observing eye so as to permit observation of the image information, wherein the illumination light source comprises a plurality of unit light sources, wherein images of the unit light sources spatially divide the exit pupil of the display optical system into a plurality of illumination areas, and wherein a plurality of parallax images are made incident simultaneously or time-serially into a single eye of an observer by making use of control means for controlling parallax images displayed on the plurality of image display means in correspondence to radiation of light from the plurality of unit light sources.

36. The image display apparatus according to Claim 35, comprising a plurality of said illumination means, wherein said control means time-divisionally controls radiation of light from the plurality of unit light sources in the illumination light source of each illumination means, thereby time-divisionally controlling incidence of light to the plurality of illumination areas in the exit pupil of the display optical system, and wherein said control means controls switching between parallax images displayed on the plurality of image display means in correspondence to incidence of light to the plurality of illumination areas.

37. The image display apparatus according to Claim 34, 35, or 36, wherein a horizontal size of the exit pupil of said display optical system is not more than 30 mm.

38. The image display apparatus according to either one of Claims 34 to 37, wherein the plurality of unit light sources of said illumination light source are comprised of a light emitter array.

39. The image display apparatus according to either one of Claims 34 to 37, wherein the plurality of unit light sources of said illumination light source are comprised of a surface illuminant and a transmissive spatial light modulator.

40. The image display apparatus according to either one of Claims 34 to 37, wherein the plurality of unit light sources of said illumination light source are comprised of a surface illuminant and a reflective spatial light modulator.

41. The image display apparatus according to either one of Claims 34 to 40, wherein said image display means comprises a transmissive spatial light modulator.

42. The image display apparatus according to either one of Claims 34 to 40, wherein said image display means comprises a reflective spatial light modulator.

43. The image display apparatus according to either one of Claims 34 to 42, wherein said display optical system has a prism body comprising a decentered, rotationally asymmetric, reflecting surface with optical powers differing depending upon azimuthal angles.

44. An image display system wherein a pair of the image observation apparatus as set forth in either one of Claims 34 to 43 are provided for the left and right eyes of the observer.
